(19) Europäisches Patentamt
European Patent Office
Office européen des brevets

(11) **EP 4 318 266 A1**

(12) **EUROPEAN PATENT APPLICATION**
published in accordance with Art. 153(4) EPC

(43) Date of publication:
**07.02.2024 Bulletin 2024/06**

(21) Application number: **21936851.1**

(22) Date of filing: **16.04.2021**

(51) International Patent Classification (IPC):
*G06F 16/30* (2019.01)     *G06F 17/40* (2006.01)

(52) Cooperative Patent Classification (CPC):
**G06F 16/30; G06F 17/40**

(86) International application number:
**PCT/ES2021/070252**

(87) International publication number:
**WO 2022/219209 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Freeverse, S.L.**
**08034 Barcelona (ES)**

(72) Inventors:
• **MATEOS SOLE, Antonio**
**08034 Barcelona (ES)**
• **SINISCALCHI, Alessandro**
**08034 Barcelona (ES)**

(74) Representative: **Mohammadian, Dario**
**KUKATI**
**P.O.Box 21021**
**08080 Barcelona (ES)**

(54) **NEW DATA CONTENT PACKET, SYSTEM AND METHOD FOR SECURE UPDATING IN DISTRIBUTED LEDGER NETWORKS**

(57)     Different aspects of the invention implement a new content data packet format to allow more flexibility, security, and efficiency, in the operations of transmitting crypto-assets, and updating the digital content thereof. This is achieved by means of a new unique multi-segment packet, and corresponding enhanced DLT system and method that enables the updating of huge amounts of crypto-assets between users, and to be stored in the DLT networks, in a secure, reliable and efficient manner. It opens the range of possible applications of the DLT networks to applications in Big Data, IOT, Web 3, MMOG, or any other environment where the trust provided by the immutability of data stored in the DLT networks is needed.

**FIG. 3**

EP 4 318 266 A1

**Description**

**TECHNICAL FIELD**

The invention is set generally in the field of telecommunications and, in particular, relates to a new data packet, and to a system and procedure, for its secure updating in distributed ledger networks.

**BACKGROUND ART**

Distributed ledger networks, to be referred to as DLT networks (from English "*Distributed Ledger Technologies*"), allow networks of computers to share an incorruptible and immutable database by storing identical copies of the records in a distributed manner on a large number of computers. They also allow computers to communicate with each other directly, peer-to-peer. Among the various types of such networks, there are those that offer more security, but are slow and expensive. Conversely, those that are faster and cheaper are at the same time the least secure. One type of DLT are blockchain networks, henceforth blockchain, which store the distributed records in the form of blockchains.

A variety of DLT network platforms exist today, with different configurations, for example, to delimit which types of computers can join the network, and, crucially, which have write privileges. Depending on the use case, a DLT network can be implemented, at one end, publicly and non-permissioned (among which Ethereum is one), and at the other end, privately and permissioned (such as those implemented by companies for their internal processes). Public networks are open to inspection by everyone and at the same time are non-permissioned, allowing anyone to join with their electronic device, and operate as just another node within the network. Private networks, on the other hand, only allow certain pre-validated users to access the records distributed on it, and are permissioned, allowing only validated users to participate as nodes in the network.

One such public, non-permissioned network is Ethereum, whose main contribution allows the contents of distributed records to contain not only passive information but additionally program code that acts on input information to generate output information. Each unit of code (or program module) that executes actions automatically like a computer program is called a smart contract. In other words, Ethereum is a huge computer distributed across thousands of nodes capable of executing countless smart contracts autonomously and automatically. Following the rules stipulated by the program code, instructions are executed that change the state of the algorithm. The distributed records are updated within a certain interval to reflect all the same information, that is, the result of the computation and the current state within the set of possible states. Each node maintains a virtual machine in exactly the same state as the other nodes. The update time additionally comprises any sub-processes of verification and correction of irregularities. DLT technology makes it possible to safeguard the integrity of the joint database, in the form of records, by aligning most of the network nodes to behave as dictated by the established protocol.

A node comprises at least one data processing device that can be programmed and that receives input data to execute according to program rules to generate output data while advancing its current state. Thus, a node may typically be a computer, although it may also be any electronic device, such as a cell phone, or a sensor with computing capabilities.

The characteristics of transparency and immutability of public and non-permissioned networks generate maximum trust among all actors in the system, in particular, users who use the network. On one hand, the content of the blocks and the exchange of information and results stored therein can be verified openly and without hindrance. On the other hand, the program code that manages the platform can be verified, whether or not they are in accordance with the rules stipulated therein. For example, you can check whether there is a procedure for detecting and correcting irregularities. In the worst case, such irregularities may be due to actors trying to cheat the network in order to take advantage of it in some way.

In fact, one of the most relevant characteristics of DLT networks is precisely their ability to detect and eliminate such risks, since they are designed based on the principle of zero trust, that is, they assume that no user of the network trusts any other user while engaging in communications, information exchange, and corresponding actions. Such platforms are designed in such a way that they can operate with some peace of mind despite this distrust because they incorporate processes based on mathematical models, for example, game theory, and incentives, to motivate the various nodes in the network to operate according to the stipulated rules in an honest manner, while promoting cross-checking of all the nodes in the network to ensure that no one is trying to cheat the system.

There are additionally at least two different types of nodes depending on the amount and/or type of information stored in their distributed records. Full nodes store the entire historical record, from the first block to the last one validated by the network. Light nodes require less computational and memory resources, since they do not act on a complete record, but only store the last records, or compressed equivalents of them. Light nodes have a rather dynamic functionality, allowing them to act on information very quickly, while it is the full nodes that give DLT networks their property of incorruptibility and immutability.

Following this development, some DLT networks have been generated based on the same principles, of which Ethereum is just one example, and which the skilled person will be able to recognize by studying the corresponding open source code. Such DLT networks, public and non-permissioned, which will be referred to herein as Layer 1, or network 1, allow new nodes to recreate the current state of the network by starting their virtual machine and executing each line of code dictated by the shared database until the last one, reproducing the history of events and occurrences, until replicating the current state of the other nodes in the network.

Each node can also transmit code arbitrarily to network 1, that is, to the virtual machine composed of all its nodes, which is similar to uploading an application to the shared computer, generating what are known as decentralized applications, DApps. DApps have become extremely popular lately as they inherit the intrinsic advantages of the underlying DLT network, that is, the incorruptibility of the processes, the layer of trust granted to each actor in the system, the fact that the code is unstoppable and runs without interruption automatically, among others.

In the jargon of the DLT technical field, each interaction with the Layer 1 network comprises sending or receiving data, wherein the data may be program code to update the smart contract or may be the input or output data related to the smart contracts, or any other type of information that is desired to be stored immutably. Interactions that comprise an expenditure of Layer 1 resources to carry out the interaction are also known as transactions. In practice, an external electronic device can read data from the Layer 1 network without spending Layer 1 resources (only its own). On the other hand, if it wants to execute some step of program code (such as performing a write operation, or triggering a function), it has to spend Layer 1 resources in this transaction. In the remainder of the description, the term transaction is preferably used to refer to those interactions that additionally need Layer 1 resources to be spent. The term Layer 1 interaction comprises both types, those that Layer 1 resources are expended as well as those that are interactions without expenditure of Layer 1 resources.

To prevent malicious attacks on a global computing system of this caliber, most DLTs have integrated a resource spending system to ensure that only honest users use the system as their resources are being expended in carrying out interactions with the DLT network. These resources are limited, and are made available by the DLT network to DApp managers. Some networks require that one unit of resource be expended for each interaction that has to be carried out, or executed, by the DLT network. The resource cost of running DApps on network 1 is proportional to the computational charge, permanent memory usage in the DLT (known as storage) and number of transactions required to run it.

In the case of the Ethereum network, these resources are called gas, or gas rate. Each transaction, such as a write action, or an arithmetic action, has a resource rate allocated in terms of gas. Regardless of who spends these resources, whether DApp users or DApp managers, the buildup can easily increase the overall resource requirements beyond what is, in practice, feasible. A simile from the communications environment would be resources such as the frequency band or bandwidth of a communications channel, wherein, in order to carry out a transmission or reception, that frequency or that capacity is used for a period, that is, the limited resource is used. More or less resources (more or less frequency or capacity) may be used depending on the mode (protocol, modulation, and so on) of transmission or reception. Similarly, in a DLT environment, more or less resources can be spent depending on the transactions to be carried out with the Layer 1 network. Technically speaking, the number of transactions and the type of transaction has a direct impact on the operation of the Layer 1 network. Heavy transactions, or a high number of transactions, result in slow operation, blocking other transactions, and wasting resources. On the contrary, a well-designed protocol, minimizing the weight of each transaction, or minimizing the number of transactions, or a combination, results in an efficient, agile protocol, allowing complex applications to be implemented.

Therefore, the use of the more secure Layer 1 DLT networks, to take advantage of the respective benefits, comes at a disadvantage in terms of resources, both for the user and for the overall network as a whole. For the user, the more code, the more data, the more interactions with the DLT network, the greater the sum of resources to be used. For the Layer 1 as a whole, whose responsibility is to process the code required by all the DApps at once, saturation and/or collapse comes as soon as some of these DApps require more aggregate processing than a single computer would be able to handle. Therefore, many DApps have been designed to take advantage of one of the most important nuclear advantages of Layer 1 DLT networks, which is the trust generated by their immutable and transparent nature when storing information. Such DApps delegate the execution of the rest of the actions, or code necessary to carry out their specific applications to external networks, known as Layer 2 or network 2.

Layer 2 networks are a collection of computers that make their computational resources available, sometimes, but not necessarily, in exchange for incentives; in other words, sometimes they rent their computational resources and charge for it. At other times, Layer 2 computers operate altruistically, to help make the system work, or are simply provided by companies interested in having their own DApps provide the desired functionality. In one aspect, the network 2 comprises one or more computers operating independently in a client-server format. In another aspect, the network 2 is a DLT network. In another aspect, network 2 comprises nodes of a proprietary network that receive no contribution for making their computational resources available. Not exhibiting such high incorruptibility characteristics of Layer 1 DLT networks subjects the Layer 2 networks to various types of malicious actions, both by external actors and by internal actors, that is, malicious operators of the network 2 in question. Therefore, the processing carried out by these networks has to be controlled or monitored, in some way, by the Layer 1 network, which is the one that safeguards the integrity and quality of the whole.

According to the executing DApp, the program code deployed in the network 1 comprises rules defining one or more unique crypto-assets (hereinafter, "CA" or "CAs") representing entities with which users of the DApp perform their actions, interacting with each other. Typically, CAs can be virtual players or virtual objects of the DApp environment. Each CA can be defined by a set of data and parameters, or content ($C_1$, $C_2$, ..., $C_N$). By way of non-limiting example, the content data may comprise ownership information, visual attribute information, related attribute information such as shape, dimensions, color, value information, sensor data, or any other type of information that is part of the unique packet to be stored in the Layer 1 network.

Depending on the nature of the DApp, these CAs may become of value to other users, or they may remain mere virtual representations of no value. One of the relevant characteristics of DApps is the unique nature that the deployed CAs may come to have. Each CA can be unique, distinguishable from others, and fully traceable, allowing anyone to view its ownership, its history of holders, how many have been created, and so on. Since CAs can be exchanged, or bought and sold, in peer-to-peer interactions, between DApp users, those that are generated sparsely are objects of desire. In technical terms, each CA is a unique packet of content data, and one of its main characteristics is that it is not fungible, that is, there can be no two identical unique packets of content data. Even if an attempt is made to counterfeit a packet by reproducing all aspects of it, it will, at a minimum, vary in terms of the packet identifier, thus being identifiable as the original. All second and subsequent forged packets can never have the same identifier, even if they reproduce its other characteristics.

It is increasingly common for existing DApps to allow their CAs to be subject to exchange, barter, or sale-purchase, that is, to transfer title, or ownership, of a unique packet of content data, from one holder to another. Because of the property of non-fungibility, if an original package becomes exceptionally valuable and is desired, the buyer can always be sure that he has acquired an original and not a duplicate. On the other hand, it is possible that the demand for those CAs that incorporate all of their characteristics as unprocessed data (rather than summarized, that is, compressed or encoded, versions of the characteristics) may increase. In contrast, due to the resource expenditure requirement mentioned above, upgrading such a CA would be a very inefficient expenditure of resources for the users involved. Moreover, for the Layer 1 network, such high resource expenditure when transmitting a large number of CAs reflects an inefficient allocation of the overall system resources, which, sustained over time, could lead to blockages and outages in transmissions, as well as interruptions in the normal operation of the DLT system.

The resource expenditure problem is worsened by the additional problem of scalability, that is, the more applications deployed, each with its multiple transactions, the worse the performance of the system, and its ability to operate. As a result, type 1 DLT networks suffer from serious scalability problems and DLT saturation. Even the simplest applications can generate significant crashes. Thus, the advantageous characteristics of type 1 networks greatly restrict the freedom of operation when designing new applications, or making them operational.

For a new application, the typical uninformed user expects, in a matter of a few minutes, to download the application, carry out some actions, and in case he needs to carry out some payment, to do so also immediately, possibly by credit card, or for further uses of the same application, by setting up a preferred payment method, for example, by bank transfer. While this is no problem for the informed user who comfortably manages his e-wallet and has cryptocurrencies native to the DApp in question, it is a complete block to the adoption of DLT technology and its applications for other uninformed users.

Some solutions rely on the full involvement of the DApp Manager (or "DM"). The DM takes control over the entire operation to be responsible for monitoring the security of the process, and to ensure that the programmed rules are being followed. This apparent security measure is in fact one of the most serious errors in this type of operation on DLT platforms. If, in order to carry out a transmission, the CA holder has to give up his private CA key to the DM, the holder completely loses control over his CA, and in effect has given away his CA to another actor in the DLT network. This poses a risk that hinders the adoption of this new technology. Moreover, if there are two malicious actors in cahoots, the loss is definite. As an example, there may be a buyer who proves that he has made a payment in native cryptocurrencies to the DM (in this case malicious), and the CA seller completes the transmission from the CA to the buyer. The CA seller will have a really hard time trying to reverse the transaction, even if he can prove that he has not received any payment from the DM.

An additional problem is the limitation of current processes to allow simultaneous trading of the same unique CA to distinct and unconnected groups of users, for example, in markets in China, Japan, Europe and the United States, simultaneously. It is possible for a malicious seller to attempt to sell its unique CA to more than one buyer through disconnected and closed user groups. In this case, a legitimate buyer from a first group may have already made payment only to find that the CA is no longer available, or has changed ownership as it has also been transferred to another buyer from a second group, posing adoption problems at best. In the worst case, the malicious DM can illicitly profit from this operation by selling his CA to more than one buyer (also known as *double-spending*).

Therefore, the idea of charging DApp programs to any Layer 1 DLT network, and expecting it to support, for example, numerous instructions and write actions received from millions of users simultaneously, is absolutely beyond the scope of any current system. For these reasons, Layer 1 networks are limited to very infrequent updates, so that decentralized applications that require perhaps less heavy and intensive computations, but more, or much more, frequent ones, cannot be executed using this configuration. In other words, there is no DLT system today that can host and run a DApp that requires continuous interaction with many users, and that needs to update its immutable records constantly.

Therefore, it is desirable to provide a solution to all, or part, of these problems.

**SUMMARY OF THE INVENTION**

It is an object of the invention to provide solutions to all, or part of, the above problems. In particular, it is an object of the invention to provide a new unique multi-segment packet of content data, UMSP, and a system, and corresponding method, of enhanced DLT that enables the updating of this unique multi-segment packet in an optimized manner.

The new packet format is multi-segment in that the contents of the unique packet are distributed in segments that are stored in at least two different memories in DLT networks, each segment in a separate memory. In contrast, this multi-segment packet remains unique since its non-fungible property is guaranteed by associating, in DLT networks, the contents of such independent memories by the same unique packet identifier. In a first aspect, the UMSP comprises exactly two segments. In other aspects, the UMSP comprises more than two segments, or as many as needed depending on the application. In one implementation by way of example, a main segment comprises data identifying the packet owner (the owner identifier) and a second segment comprises other information, for example, raw content data, summarized content data, or information that allows the content data in each segment to be certified.

The characteristics of the new packet format define the configuration of the system components and the method steps acting on the UMSP. Because of this interrelationship, the technical characteristics of the system and the method are defined in terms that inherently comprise the technical characteristics of the data structure.

This new multi-segment unique packet format allows for an optimized DLT system to carry out multiple transmissions of CAs between users of multiple unconnected groups through a process capable of involving a potentially huge number of interactions between users in a reliable, secure, and efficient manner. By enabling the interface between any type of existing Layer 1 DLT network, it does not require the complex, time-consuming, costly and highly risky process of generating a new Layer 1 DLT network. This opens up the range of possible DLT network applications to an infinite number according to the needs of society, covering much more than just carrying out DLT payments, for example, applications in Big Data, IOT, Web 3, MMOG, or any other environment that needs the trust provided by the immutability of data stored in the DLT network. The reliable, secure, and efficient updating of content between different users will enable the adoption of DLT technology in all these environments.

The various embodiments of the invention enable secure and scalable updating of unique packets of digital content, while allowing in-chain verification of the content thereof. In detail, it enables i) the verification of the content at any time since the creation of the CA (not only the current content, but all previous states as well); ii) performing in-chain verification using smart contracts; iii) the content of the CAs to change, or evolve, over time, in a scalable manner for a very large number of CAs; (iv) CA creators to manage the evolution of content as the CA is passed between different CA holders; and (v) CA creators to manage the evolution of content without necessarily being restricted to using the smart contracts of a particular Layer 1 network, as they can outsource this management to their own external networks.

The invention is defined by the independent claims, while preferred embodiments are defined by the dependent claims.

It is therefore an object of the invention to provide a unique multi-segment packet of content data in an enhanced DLT system for updating digital content.

It is another object of the invention to provide a content digital component in an enhanced DLT system for updating digital content.

It is another object of the invention to provide an optimized method, in a content digital component, of updating digital content.

It is another object of the invention to provide an ownership digital component in an enhanced DLT system for updating digital content.

It is another object of the invention to provide an optimized method, in an ownership digital component of updating digital content.

It is another object of the invention to provide an interface digital component in an enhanced DLT system for updating digital content.

It is another object of the invention to provide an enhanced method, in an interface digital component, of updating digital content. It is another object of the invention to provide an enhanced DLT system for updating digital content in an optimized manner.

It is another object of the invention to provide an optimized content update method in an enhanced DLT system.

It is another object of the invention to provide a computer program comprising instructions, which once executed on a processor, carry out the steps of a content update method in an enhanced DLT system.

It is another object of the invention to provide a computer readable medium comprising instructions, which once executed on a processor, carry out content update steps in an enhanced DLT system.

The invention provides methods and devices that implement various aspects, embodiments, and features of the invention, and are implemented by various digital means. The various digital means may comprise, for example, hardware, software, firmware, or a combination thereof, and any one, or combination of, the various means may implement these techniques.

For a hardware implementation, the various digital means may comprise processing units implemented on one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform described functions, or a combination thereof.

For a software implementation, the various digital means may comprise modules (for example, processes, functions, and so forth) that carry out the described functions. The software code may be stored in a memory unit and executed by a processor. The memory unit may be implemented within the processor or external to the processor.

Various aspects, configurations, and embodiments of the invention are described. In particular, the invention provides methods, apparatus, systems, processors, program code, computer-readable means, and other apparatuses and elements that implement various aspects, configurations, and features of the invention, such as described in the following.

## BRIEF DESCRIPTION OF THE DRAWINGS

The features and advantages of the present invention will become more apparent from the detailed description which follows in conjunction with the drawings, wherein like reference characters identify corresponding elements in different drawings. Corresponding elements may also be referenced by different characters.

**FIG. 1** shows different representations of a unique data packet of digital content.
**FIG. 2** shows a unique multi-segment packet of content data according to one embodiment of the invention.
**FIG. 3** shows a DLT system for updating digital content in an optimized manner according to another embodiment of the invention.
**FIG. 4** shows an optimized method of updating digital content according to another embodiment of the invention.

## DETAILED DESCRIPTION OF THE INVENTION

This invention is deployed in any Layer 1 network that is a programmable distributed ledger system. As of today, Ethereum, TRON, EOS, or XDai, represent such a system, which, moreover, are based on blockchain technology, or blockchain. However, the teachings of the invention apply to any programmable DLT environment, that is, to any distributed ledger system that stores not only data, but also programmable code, enabling the deployment and execution of smart contracts (as a whole forming a DApp). Such programmable DLT environments comprise at least one virtual machine and at least one distributed record. The distributed records store, in part, the rules of the algorithm to be executed. Based on input data, the virtual machine acts on the information, either received or stored in the distributed records, in correspondence with the defined rules, to advance the state of the algorithm and generate output data, which can also be stored in the distributed records.

This generic environment may be programmed by deploying particular software to run a desired decentralized application, or DApp. Once the DApp program code is deployed, the part of the DLT network executing the DApp may be represented as at least one DApp processor and at least one DApp memory. That is, the DApp processor, or processing means, represents the part of the DLT virtual machine that processes information for that particular DApp, and the DApp memory, or storage means, represents the part of the DLT network allocated to execute and store data to carry out the required DApp. In the remainder of the description, any reference to "*processor*" refers to the DApp processor, and any reference to "*memory*" refers to the DApp memory. Further, any reference to distributed ledger network, first network, Layer 1 network, network 1, Ethereum, EOS, or blockchain, or simply "*DLT*", refers to the programmable DLT network.

As the network 1 is a DLT network, any corresponding program code, means or modules exist in multiple copies, one copy per complete node, as each node runs a processor within the DLT environment. In this description, the program means or modules are referred to singularly (for example, *the verifier*), although the skilled person will understand that they are actually installed and implemented in multiple copies distributed across network 1 (that is, the verifier actually refers to a verifier installed on each node). Unless, in some aspect, the advantages of implementing the invention on really a single node is explicitly highlighted, the description in general assumes that communications are carried out in the distributed environment described.

The term "*content*" will be used in the context of this invention to refer to crypto-assets, CA, (unique and non-fungible) generated in the environment of DLT platforms. Crypto-assets are virtual representations of value and/or utility. They are also known as non-fungible tokens, avatars, digital twins, electronic stickers, virtual players, and so on. The term content is used to encompass all these variants of virtual representations transmissible between holders since, technologically, they are packets of data containing content, such as audio, video, image, multimedia, metadata, and other information, such as parameters and attributes, a mixture of these, or a summary description thereof.

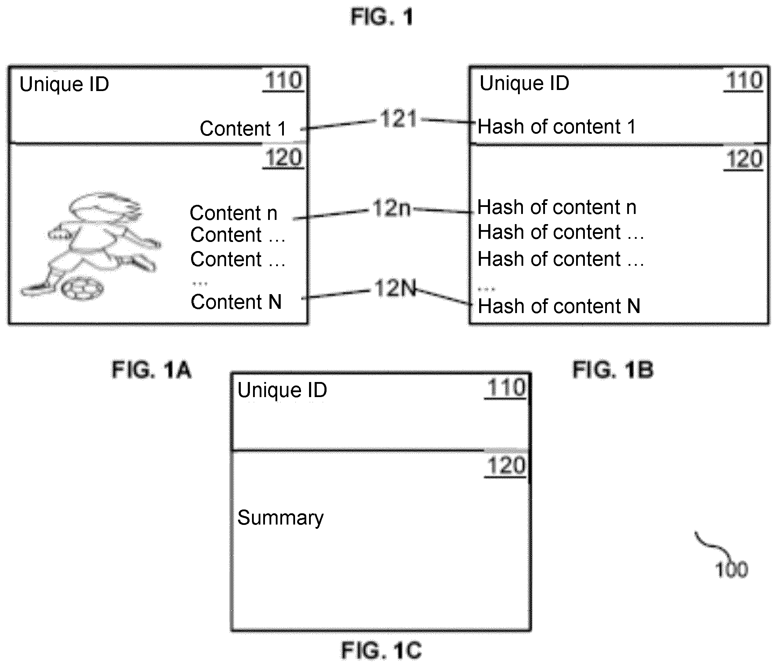

**FIG. 1** shows different representations of such a unique packet of digital content by way of example. In **FIG. 1A,** the data packet 100 carrying the content comprises a header section 110 and a payload section 120. The header section comprises at least the unique identifier of the content packet (unique ID) and a main content 121 (content 1, in this case, ownership data), as well as other content (different parameters common to the blocks in the blockchain). The payload section comprises the other data (12n - 12N) needed to define the rest of the content (content n ... content N), in this case visually represented as a soccer player, along with other attributes of the virtual player. In this aspect all information is explicitly stored directly in the DLT for the digital content, that is, the packet comprises the content data in unprocessed form (content 1 ... content N).

In another aspect of **FIG. 1B**, instead of storing all of the raw content data in the DLT network, not all of the information regarding the digital content is stored, but rather a summarized (compressed or encoded) representation of the digital content is stored, saving space and resources (including gas). In this aspect, the complete data defining the CA is stored on a Layer 2 network, for example, stored off-chain, or on another network (for example, IPFS), or simply, on some other computers, locally. Summarized content data can be generated in multiple ways. In one implementation, they are obtained by applying a mathematical function known as a hash, H, to the data in the content section:

$$id = H(content), \qquad \text{[expression 1]}$$

wherein the hash function can be chosen among several alternatives available in the literature (SHA2, SHA3, MD5, and so on); in this implementation, the properties of the hash functions ensure that no two data packets with different contents with same identifiers can exist. In other words, two data packets with identical contents will also have identical identifiers. In this aspect, while the unique packet comprises the same unique identifier (unique ID), the digital content is stored in a summarized form (by its selected encoding or compression). In the case of a simple hash, both the content data (121) of the header section 110 and the content data (12n - 12N) of the payload section 120 comprise only the hash of the digital content, which in turn, is the content identifier (hash content 1, ..., hash content n, ..., hash content N). Hybrid options exist, where some fields are stored in unprocessed form (for example, ownership data), and the others by hashing.

If the data is not stored in unprocessed form, and the data refers, for example, to an image, it is not possible to obtain the image from the DLT network, but if such an image is available, it is possible to check that the data packet represents precisely that image, simply by calculating the hash, and comparing with the hash of the data packet. Note that transferring ownership of the CA, and thus in effect updating the digital content, usually involves only modifying the ownership section of the data packet, for example by changing the public key of one user (previous owner) to the public key of another (new owner).

While there are various techniques of representing content by means of a summarized (encoded or compressed) version, the technique used is required to have at least the following two properties: that the summary 1) be of such reduced size that it can be received and stored by a single DLT transaction, and 2) allow for reduced verification. In the context of this disclosure, verification is considered reduced when digital verification means deployed as a smart contract in the DLT network can prove that the digest comprises certain information by means of a single DLT transaction. Such a transaction comprises receiving the data via a verification request, extracting the stored data from the DLT network, determining whether the received data is included in the stored data, and returning true if it is or false if it is not.

In another implementation, a DApp installed in the DLT network is responsible for creating a unique identifying number each time a crypto-asset is created, for example, by simply assigning consecutive integers. In the aspect of **FIG. 1C,** a single digest is stored in the payload section wherein all contents are certified together, saving more space and resources (including gas). Thus, the payload section 120 comprises a summary corresponding to the encoding or compression of multiple content data.

In this aspect, the content data is not stored in any physical memory, not even local to the DM, but is generated on the fly by code. For example, the code of a DApp may be programmed to generate this data by an algorithm when required. A DApp may be configured so that, when it receives a request to provide data on CAs indexed from 0 to 1000, it generates random images, with seed equal to the required index, and declares that its owner is the DApp manager. Thus, regardless of whether the contents of the CAs are explicitly stored in memory or whether all or part of them are generated on the fly programmatically, they are referred to as "the content data". As an example, suppose a user is assigned an identifier of 23, and a CA is generated with an identifier of 98, then the CA could be assigned as a unique ID = 000000980000000023. A distributed verifier can be deployed with a "getOwner" function that reads the unique ID to the CA and keeps the last digits. In this way, starting only from the unique ID to the CA, the ownership of the CA can be checked, but anonymously, since the ownership identifier is not explicitly stored in the DLT network.

Thus, if a user is interested in acquiring a virtual player, just by identifying the virtual player using its unique identifier (Unique ID), the DApp, by means of the corresponding smart contract, obtains the attributes that correspond to this particular player and returns them to the information requester. The buyer can thus validate both the current ownership of the CA to be acquired as well as its content. This is implemented by using network 1 to i) in the case of ownership in unprocessed form, request network 1 to read that ownership; or ii) in the case of ownership in summarized (hashed) form, use the pre-hash data to certify the attributes of the virtual player. Certification (or validation) of the CA content is an important property of the DApp for its users. Although the ownership of a CA can be updated without performing any certification steps, it is common for a recipient of a CA to perform a certification action before completing the ownership update. This, at a minimum, allows the current CA owner and the contents of the CA to be certified. In this way, the receiver proceeds to complete the CA transmission securely.

The header section of the data packet, regardless of whether the data packet information is stored in the same DLT network, or is dynamically generated each time it is referenced, comprises at least one field with identifying data thereof (unique ID), and at least one field with content data, for example, data on the current ownership of the packet, together with its particulars. In addition, the payload section comprises other content data of the CA, together with its particulars. In addition to being either explicitly written in memory or generated programmatically, these fields may be located in different DLT DApps. **Table I** shows the different types of information stored in the layer 1 DLT network related to a CA:

TABLE I

| addr: FV123456789 | | | |
|---|---|---|---|
| **Owner** | | **CA** | |
| **Owner ID** | FVU169e3eba03 | **Unique ID** | FVCA123456789 |
| **Geographic zone** | Europe, Asia | **Geographic zone** | only Europe |
| **Minimum Ether** | 77777777 | **Blocked/ Unblocked** | BLOCKED |
| **Multi-sig** | NO | | |
| [more conditions] | [.......] | [more conditions] | [.......] |
| [more restrictions] | [.......] | [more restrictions] | [.......] |

At least the unique identifier of the CA (Unique ID) must be repeated in each segment. The other data may be repeated, or segmented into at least two segments interrelated by the same unique identifier. An example of segmentation is to create a main segment with ownership information (for example, with the Owner ID and optionally other ownership-related information), and at least one other segment with the other data.

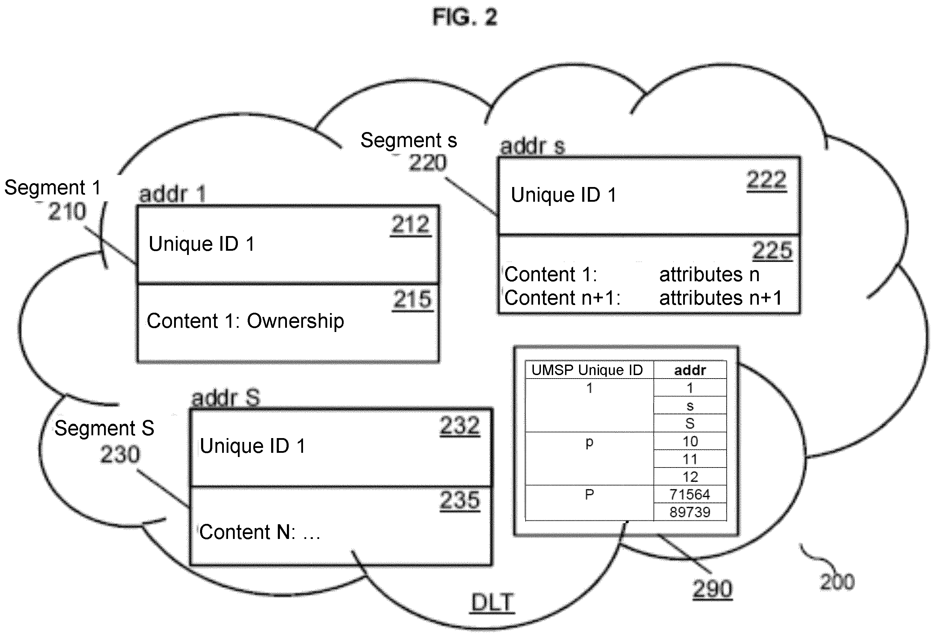

**FIG. 2** shows the unique multi-segment packet of content data, UMSP, according to one embodiment of the invention. The data packet is stored in a Layer 1 network 200. Each segment (s = 1 to S) of the UMSP comprises data related to one or more content (121 to 12N). By way of example, a main segment 210 of the UMSP comprises, in a header section 212, data identifying the UMSP (Unique ID 1), and other content 215, in this case, data about the owner of the UMSP, that is, ownership information. This first segment is identified in the network 1, typically, by a respective storage address, or "address" (addr 1). Another segment 220 of the UMSP comprises, in a header section 222, in addition to the same identifying data of the UMSP (Unique ID 1), another content 225, in this case, data about the attributes of the CA. This other segment has another different respective storage address (addr s) associated with it. It is possible to segment the CA-related information into as many segments as desired, up to S segments, each segment 230 comprising additional content data 235 apart from the header section 232 comprising the same UMSP (Unique ID 1) identifying data. The last segment has another distinct respective storage address associated with it (addr S). This information is stored in the distributed registers in addition to the information stored about each UMSP (**Table I**).

Therefore, information is stored in a memory 290 in the DLT network which relates the multiple segments corresponding to each UMSP. **Table II** shows, as an example, for each of all UMSPs (1, ..., p, ...P), the associations between identifiers of each UMSP (Unique ID) and the addresses (addr) of its multiple segments (1, ...s, ..., S):

TABLE II

| UMSP unique ID | Number of segments | addr |
|---|---|---|
| 1 | 3 | 1 |
| | | s |
| | | S |
| p | 3 | 10 |
| | | 11 |
| | | 12 |
| P | 2 | 71564 |
| | | 89739 |

For the sake of simplicity, identifiers and addresses have been represented artificially, whereas the skilled person understands that real identifiers and addresses are often more complex alphanumeric representations.

When an operation is performed on a particular UMSP (for example, packet p, in this case, of three segments), their respective addresses (10, 11, 12) are identified, to perform operations on the contents thereof, for example, updating the owner (updating user ID), or updating some other content (for example, geographic area), depending on the segment wherein the content to be updated is stored.

Thus, the UMSP information is segmented into at least two segments that are stored separately, in distinct DLT memories, but are associated with each other by the same UMSP identifier. Therefore, the new UMSP format allows storing all CA information in network 1, ensuring its immutability and transparency, while allowing different segments to be managed independently. This new format enables the generation of a significant number of applications that otherwise could not be implemented over existing Layer 1 networks, among other reasons, since it allows optimized management of the resources required when storing information in the Layer 1 network and carrying out a large number of transactions with the Layer 1 network.

The attributes data specifies which data, and which inputs, must be provided to the DLT so that certain actions on the data packet can be executed; thus, the DLT network verifies that a certain number of conditions $C_i$, applied on the inputs, return 1 (in binary, *correct*):

$$C_i\,(I, state)\ =\ 1,\ \forall i \qquad\qquad \text{[expression 2]}.$$

These conditions may depend on the current state of the DLT or DApp (represented by *state*), for example, the hour and minute.

In one aspect, the attributes data comprises a public key, *pk,* of a private key/public key pair, (*pk, sk*) (from "public key" and "secret key"); such that the inputs I to be provided are a message *M,* together with its digital signature *F(M),* signed with the private key, *sk,* for the data packet to be modified by a DApp. In this case, one of the conditions checked by the DLT network is that a particular message *M* was signed by the *pk* corresponding to *sk*:

$$if\ extractPublicKey(M, F(M))\ ==\ pk:\ return\ 1;\ else: return\ 0$$

$$\text{[expression 3]}.$$

The functions F() and extractPublicKey() depend on the digital signature scheme used, for which one can choose among several state-of-the-art asymmetric encryption methods, such as Elliptic Curve Cryptography, RSA, among others. In other aspects, the ownership identifier is a value derived from *pk,* such as in Ethereum, where the identifier is obtained by applying one or more concatenated sha256 hash steps, followed by a bit transaction.

The entries $I^{cong}, I^{act}$ comprise digital signatures of the above messages, the signatures being obtained by means of the private keys *sk* corresponding to the public keys *pk* referenced in the ownership section of the data packets, or in lists of authorized public keys stored in memory. In this aspect, part of the conditions are requirements that these public keys match the keys stored in the ownership section $pk_{owner}$:

$$pk \; = \; extractPublicKey(M, F(M)) \;,$$

$$if \; pk \; == \; pk_{owner} \; : \; return \; 1; \; else: return \; 0 \qquad \text{[expression 4].}$$

In the case where user identifiers are identifiers derivable from public keys, such as Ethereum Addresses (EA), this condition is verified if:

$$pk \; = \; extractPublicKey(M, F(M)), \; EA(pk) \; == \; EA(pk_{owner}) \; ? \; \text{[expression 5].}$$

In one aspect, to enhance the security of the system, the first network processor is programmed to require, in addition to the digital signature of the interlocutor, additional input data $I^{cong}, I^{act}$ that proves that the messages, or requests, received were explicitly made by the corresponding users. In one aspect, this requires that each action by these users must be accompanied by a digital signature, using the private key corresponding to the public key associated with the user. Therefore, the deployed smart contracts must temporarily store both the action coming from each user and its digital signature. Thus, when the request or message in question is finally sent to the smart contract, it must also be accompanied by the corresponding digital signatures.

In general, as mentioned above, the DApp is programmed to perform a set of checks, of which ownership checks are a subset, and may include requirements related to the state of the DApp. For example, it may be required that a certain amount of time has passed since the last update, or that the other party is not on a blacklist of excluded identifiers for previous misbehavior, and so on.

In another aspect, the memory stores usage restriction data (or conditions) for each unique multi-segment packet of content data. For example, content update may be restricted according to various parameters, for example, time, or geographic area, and so forth, as for example depicted in Table I. One of the actions to be restricted is precisely the modification of the ownership of a particular content.

One of the restrictions on the use of this method by anyone is that all communications, or messages in this case, must be digitally signed with the corresponding user's secret key. Before any action is taken, the Layer 1 network processor (that is, the smart contract in question) verifies that the message matches the key that signed it, and proceeds to validate the legitimacy of the signing user. This verification involves accessing and extracting from the distributed records of the Layer 1 network the public key of the owner identified with the packet identifier. In the same way, it also verifies that the content belongs to the signing user. The modules are programmed to check all the requirements that will be checked by the modules installed in the DApp, as sooner or later the smart contract will perform these checks before performing any modification.

If the signature does not match, or is not the owner, or is otherwise restricted (for example, the packet is locked, and not open for update) or does not pass all the checks that the smart contract would perform, the message is not accepted as legitimate, and is ignored. This measure ensures not only that only the legitimate owner can sign the possible change of ownership of a content that belongs to him, but also that, eventually, the smart contract will accept to process the action proposed by the user. Since the DApp is programmed to check these conditions before processing the actions, the fact that any node could malfunction, or in an intentionally malicious manner, would have no effect.

The verification steps comprise, upon receiving a message, the digital validation means detecting this action and proceeding to access and extract from the distributed records of the DLT network the data necessary to verify the real ownership of the message content. Alternatively, the digital validation means keep in memory a synchronized copy of the base of the records of the first network, thus avoiding having to access it after receiving each message. If the owner stored in the DLT network does not match the one identified in the message, the update process is aborted. Optionally, the user is expelled for improper impersonation.

In another aspect, ownership conditions may require the provision of several valid digital signatures, thus representing shared ownership via multisignature wallets. In that case, actions on that CA will only be processed if all required digital signatures are provided.

In another aspect, the conditions include other checks, not directly related to the owner of the CA, but to the state of the DLT or the DApp. For example, if the data packet represents a soccer player in a soccer game, only the person having knowledge of the private key corresponding to this player can line him up in a match. The ownership of a unique multi-segment packet of content data can be transmitted over communication channels in several ways. In the DLT environment, a peer-to-peer transmission of ownership can also be made directly from a first user to a second user, using the unique identifier and, typically but not in all respects, the digital signature authorizing the transfer by the seller.

A transmitter may effect a peer-to-peer transmission of a UMSP directly to another user as long as it knows the identifier of the UMSP to transmit, possesses the inputs I necessary to verify the conditions $C_i$ under which it may change the ownership section of the UMSP, and the receiver's identifier. Similarly, a smart contract may perform a peer-to-peer transmission of a UMSP directly between two users as long as it receives the identifier of the UMSP to be transmitted, the transmitter's identifier, the conditions under which it may change the ownership section of the UMSP, and the receiver's identifier.

Unlike the transmission of any data packet in non-DLT communication networks, wherein what happens is that a copy of the content is transmitted from the transmitter to the receiver, in the DLT environment, the transmission of the CA itself takes place, which changes ownership as the unique identifier is transmitted from one user to another. In other words, since no two users can have content with the same unique identifier, the transmission faithfully replicates the reality of the non-virtual world, that is, when making a gift, the transmitting user is left without the gift since it has changed ownership at the end of the transaction. In the DLT network environment, when a transmission is made effective, the transmitter is left without the possibility of performing any action on the content, since when the public key (or derived) associated with the CA is changed, a different secret key (not known to the original owner) is required to act on it. In other words, the digital content is transmitted from one user to another only once, with no double-spending.

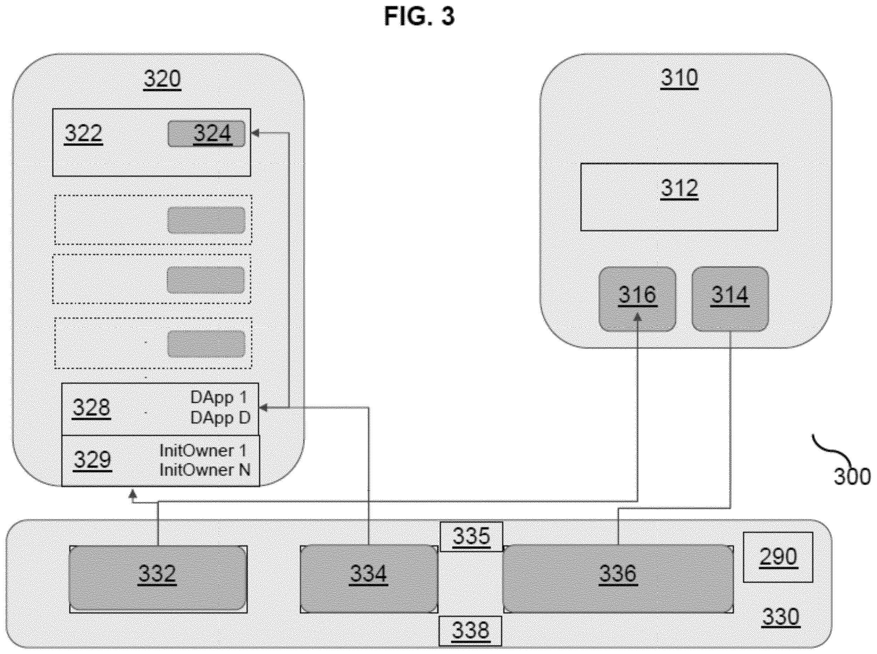

FIG. 3 shows a DLT system for updating digital content in an optimized manner according to another embodiment of the invention, wherein the digital content is configured according to the unique multi-segment packet of content data of the embodiment of the invention of FIG. 2. This figure shows the program and storage components once they have been deployed, and initialized where appropriate, in the Layer 1 network. Each deployed (and initialized) component comprises program code (for reproducing a smart contract algorithm), and corresponding distributed storage. Also, each deployed component is identified in the Layer 1 network by its corresponding address (addr 1, ..., addr s, ..., addr S). Deployment of the system, either as a new Layer 1 network, or as implementation in an existing Layer 1 network, is outside the disclosure of this invention, and it is understood that the skilled person will be able to perform the deployment by following the established processes for doing so.

The system 300 comprises a component 310 of ownership, a component 320 of content, and a component 330 of interface. The distributed storage of the ownership component comprises all main (210) segments of the transmitted UMSPs, and its corresponding smart contract is configured to operate on this data. The distributed storage of the content component comprises all secondary (220, 230), and subsequent, segments of the UMSPs, and its corresponding smart contract is configured to operate on this data. The interface component comprises a smart contract configured to perform write and read operations with the smart contracts of the first and second components, in addition to the distributed memory 290 that stores the associations between the UMSPs and their multiple segments.

The ownership component 310 comprises storage means 312 configured to store, at least, the identifiers (Unique ID 1, ..., Unique ID p, ..., Unique ID P) of the UMSPs along with the identifiers (215) of their current owners. Additionally, the ownership component 310 comprises write means 314 configured to modify the ownership of a UMSP. In one aspect, this modification is carried out by an action of replacing the unique identifier of the previous owner with the unique identifier of the new owner. In another aspect this modification is carried out by a concatenation action (of the new identifier following the previous identifier), wherein the more recent (new) identifier is recognized as the valid one.

Additionally, the ownership component 310 comprises validation means 316 configured to verify the validity of the current UMSP owner. The validation means are configured to certify both that a UMSP identifier is stored, or not stored, in the ownership component. In one aspect, the validation means 316 are configured to receive a request comprising a UMSP identifier, and extract, if present, the unique owner identifier stored in the Layer 1 network that corresponds to the received UMSP identifier, and return current owner information, if present, or non-existence information, depending on the case. In another aspect, the ownership data is represented by summaries, or verification codes (hashes, Merkle Roots, and so forth); in this case, the validation means 316 are configured to receive a request comprising a UMSP identifier and an owner identifier, and use an algorithm capable of certifying that the owner identifier is the owner of the CA, and returning true or false, as the case may be. This aspect requires the use of an algorithm that allows the demonstration of non-inclusion, such as a sparse Merkle tree, in order to be able to certify that no owner is on record for a given CA.

The content component 320 comprises storage means 322 configured to store, in addition to data (Unique ID 1, ..., Unique ID p, ..., Unique ID P) identifying the UMSP, other content data (225, 235), for example, data about the attributes of the CA. In addition, it is configured to store the data of the initial owner, who was assigned the ownership of the CA when it was generated. As will be seen below, the ownership component carries out updates of the ownership data as from the first update. However, the content component will always have the first ownership record in storage.

Additionally, the content component comprises verification means 324 configured to verify the stored content. In a first aspect, if the content data has been stored as raw data, the verification means are configured to return the raw data upon receiving the UMSP identifier. In a second aspect, if the content data has been stored in summarized form, upon receiving, in addition to the UMSP identifier, the corresponding summary, the verification means are configured to compare the received summary with the stored summary corresponding to the received UMSP identifier, and return a positive result if both summaries are identical, or return a negative result if they are not identical.

The content component 320 comprises as many storage means 322 and verification means 324 as necessary. In one aspect, for each UMSP, storage means and corresponding verification means 324 are configured. In another aspect, each second and subsequent segments of the UMSP may be stored separately, wherein verification of all segments of a UMSP is performed by unique verification means. In yet another aspect, the verification function can be decoupled from the UMSP, and a plurality of UMSPs grouped under the management of a unique verification means.

The option chosen depends on different factors, for example, the typology of the application in which the UMSPs are transmitted, the frequency or number of transmissions, who the owners are, whether the application is managed by a DM, by several DMs, or directly by users. Thus, in another aspect, the content component 320 comprises storage means 328 configured to store, in addition to the data (Unique ID 1, ..., Unique ID p, ..., Unique ID P) identifying the UMSP, data of the particular applications (DApp1, ..., DApp d, ..., DApp D). In this aspect, these storage means group all the UMSPs that are part of the same application. This would only require single verification means per application grouping.

In another aspect, the content component 320 comprises storage means 329 configured to store, in addition to the (Unique ID 1, ..., Unique ID p, ..., Unique ID P) identifying data of the UMSP, data of the initial owner, that is, the first owner (initowner 1, ..., InitOwner n, ..., InitOwner N) of the UMSP. This configuration optimizes the management of those UMSPs that are never transmitted, saving resources by not needing to carry out transactions with the ownership component. In no implementation is it allowed to modify these values (initOwners) by any actor, for example, as code is not incorporated to the program code that allows to do so.

Upon a first transfer of a UMSP from an initial owner to a new owner, the responsibility for updating the records shifts from the content component to the ownership component. In this case, the ownership component only starts to operate as soon as a first transfer of ownership of a UMSP takes place. In this case, the ownership component is configured to store, by means of the corresponding write operation, the new owner, which is the receiver of the transmission, for each UMSP. In certain implementations, these changes (in component 310) are performed in batches, or sets, of owner changes at a time. For example, rewriting the sparse Merkle Root every 15 minutes, which can lead to changes of thousands of owners.

Thus, on one hand, the content component never updates the ownership data, but updates the content data. On the other hand, the ownership component never updates the content data, but only the ownership data. This segmentation makes it possible to efficiently manage the use of resources according to the need and frequency of updating different types of information. In a first use case, the UMSPs, once initialized, are transmitted multiple times in a short time, very frequently. The enhanced system makes it possible to manage these updates efficiently and with minimum resource expenditure. In another use case, the UMSPs, once initialized, are never transmitted, instead, their attributes are updated multiple times in a short time, very frequently. The enhanced system described allows these other updates to be managed efficiently and with the minimum expenditure of resources. In even another mixed aspect, the UMSPs, once initialized, change attributes as the user's interaction with the application progresses, and moreover, they are transmitted multiple times in a short time, very frequently. The enhanced system described above makes it possible to optimize the management of these updates efficiently and with the minimum expenditure of resources. The flexibility allowed by the optimized management of the UMSPs facilitates the generation of multiple new applications, since it allows the secure update of CAs, and at the same time their transmission independently of the evolution of their content, in both cases allowing the certification of ownership and content of each UMSP.

The interface component 330 performs the aforementioned update operations. In aspects where the other components (310 and 320) are deployed as separate modules, the interface component 330 contains the corresponding addresses (addr) to be able to communicate with them.

In one aspect, the interface component comprises ownership verification means 332 configured to communicate with the verification means 316 of the ownership component to validate the ownership of the UMSP. The ownership component 310 comprises means configured to receive: i) the UMSP identifier, ii) data about the attributes to be certified of the CA, iii) data about the current ownership of the CA to be certified, iv) optional data intended to enable the change of ownership of the CA, such as orders signed by the current owner, and/or the desired new owner.

First, the verification means 332 of the interface component 330 distributes the current ownership data to be certified to the verification means 316 of the ownership component 310. If the result finds that the current owner differs from the proposed owner, the process terminates. If the result finds that no owner for such a UMSP is listed in component 310, the ownership verification means 332 are configured to check against the initial owner storage means 329 (of content component 320), and validate the ownership of the UMSP. If the result is positive, the UMSP owner is positively validated. On the other hand, if the result is negative, the interface component 330 does not allow any further operation to be performed.

In another aspect, the interface component 330 comprises content verification means 334 configured to communicate with the content verification means 324 to validate the content of the unique multi-segment packet, or to validate, by extraction of the application data 328, the state of the application wherein said unique multi-segment packet is located.

If the result of the checks carried out by the interface component 330 (either the ownership verification means 332 or the content verification means 334) is positive, the interface component 330 comprises means 335 configured to receive optional data and carry out certain checks, such as verifying that such data contains the consent of the current owner by an explicit signature using his private key, and/or corresponding verification on the desired owner.

The number and type of checks to be performed is configurable according to the particular DApp, and the requirements of its users. Thus, when updating the contents of a UMSP, one check, or any combination of the above checks, may be performed.

If the result of the checks is positive, the ownership data is updated. For this purpose, the interface component 330 comprises new owner writing means 336, configured to receive as input the UMSP identifier, and communicate with the ownership writing means 314 of the ownership component 310, to update the UMSP owner from the previous owner to the new owner.

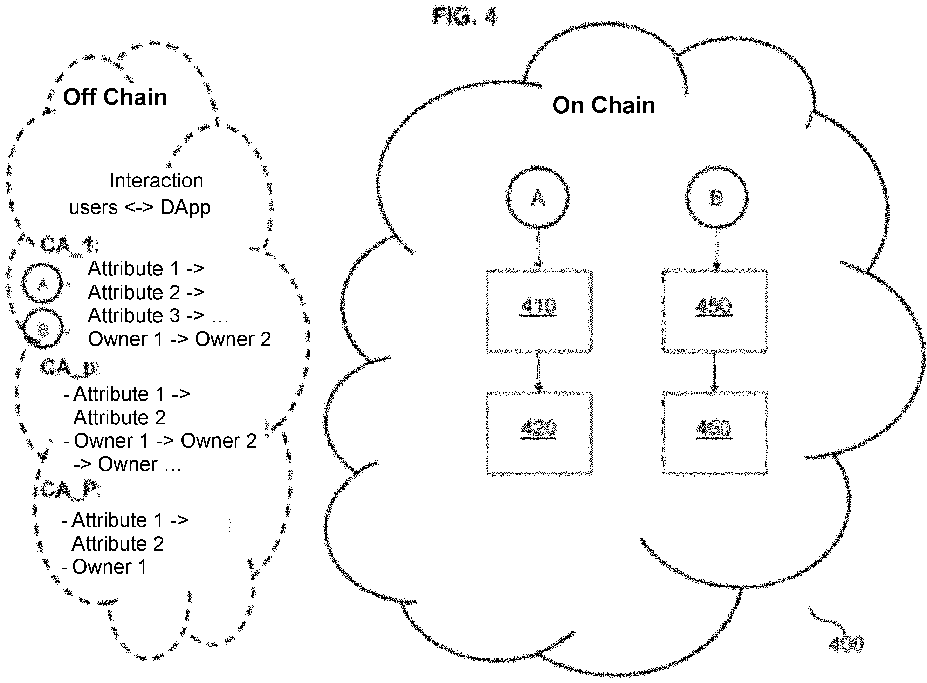

**FIG. 4** shows a method in a DLT system for updating digital content in an optimized manner according to another embodiment of the invention, wherein the digital content is configured according to the unique multi-segment packet of content data of the embodiment of the invention of FIG. 2. As detailed, each program module executes one or more procedural steps. The method is carried out by a smart contract, implemented as a program code in one or more modules, or by several smart contracts, implemented as a program code in one or more modules. The order or number of checks carried out by the various means 332, 334 and 335 may be different depending on the particular implementation or application.

The ownership component 310 is configured to perform various aspects of a method. In one aspect, the ownership component stores, at least, the identifiers (Unique ID 1, ..., Unique ID p, ..., Unique ID P) of the UMSPs along with the identifiers (215) of their current owners.

In another aspect, the ownership component 310 modifies the ownership of a UMSP. In one aspect, this modification is performed by an action of replacing the unique identifier of the previous owner with the unique identifier of the new owner. In another aspect, this modification is performed by a concatenation action (of the new identifier following the previous identifier), wherein the more recent (new) identifier is recognized as the valid one. In another aspect, the ownership component of all, or part, of the registered UMSPs are in summarized format, wherein the ownership change is accomplished by replacing, or concatenating, an updated summary, potentially affecting more than one UMSP simultaneously.

In another aspect, and as described above, the ownership component verifies the validity of the current owner of the UMSP. It does this by certifying that a UMSP identifier is not stored in the ownership component.

The content component 320 is configured to carry out various aspects of a method. In one aspect, in addition to data (Unique ID 1, ..., Unique ID p, ..., Unique ID P) identifying the UMSP, other content data (225, 235), for example, data about attributes of the UMSP, is stored.

In another aspect, the stored content is verified. In a first aspect, if the content data has been stored as raw data, the raw data is returned upon receipt of the UMSP identifier, or compared with data that have been provided, returning true or false as appropriate. In a second aspect, if the content data has been stored in summarized form (for example, by means of a Merkle root), upon receiving, in addition to the UMSP identifier, the corresponding summary, a comparison algorithm (for example, a Merkle test verification algorithm) adapted to the summary algorithm is used to certify whether the ownership data received matches that recorded in summarized form, and a positive result is returned if both summaries are identical, or a negative result is returned if they are not identical.

In another aspect, the configuration depends on different factors, for example, the typology of the application in which the UMSPs are transmitted, the frequency or number of transmissions, who the owners are, whether the application is managed by a DM, by several DMs, or directly by users. Thus, in another aspect, the content component 320 stores, in addition to the data (Unique ID 1, ..., Unique ID p, ..., Unique ID P) identifying the UMSP, application data (DApp1, ..., DApp d, ..., DApp D) in particular. In this aspect, all the UMSPs of the same application that are updated are grouped together.

In another aspect, the content component 320 stores, in addition to the data (Unique ID 1, ..., Unique ID p, ..., Unique ID P) identifying the UMSP, data of the initial owner, that is, the first owner (initowner 1, ..., InitOwner o, ..., InitOwner O). This configuration optimizes the management of those UMSPs that are never transmitted, saving resources by not needing to carry out transactions with the ownership component.

Upon a first transfer of a UMSP from an initial owner to a new owner, the responsibility for updating the records shifts from the content component 320 to the ownership component 310. That is, the ownership component only starts to operate as soon as a first transfer of ownership of a UMSP takes place. Therefore, the ownership component is configured to store, by means of the corresponding write operation, the new owner, for each UMSP.

Hence, on one hand, the content component is not configured to update ownership data (stored in the main segment), but yes content data (stored in the other segments). Conversely, the ownership component is not configured to update the content data (stored in the other segments), but yes the ownership data (stored in the main segment). This segmentation makes it possible to efficiently manage the use of resources according to the need and frequency of updating different types of information. In a first use case, the UMSPs, once initialized, are transmitted multiple times in a short time, very frequently. The optimized method makes it possible to manage these updates efficiently and with the minimum expenditure of resources. Moreover, it allows the update of both types of field to be separated both in time (so that it is completely asynchronous), and by authorization (so that the update of the fields owned by each UMSP can be carried out by actors and logics completely separate from the actors and logics updating the ownership data). In another use case, the UMSPs, once initialized, are never transmitted, instead, their attributes are updated multiple times in a short time, very frequently. The optimized method described allows to manage these other updates efficiently and with the minimum expenditure of resources. In even another mixed aspect, the UMSPs, once initialized, change attributes as the user's interaction with the application progresses, and moreover, they are transmitted multiple times in a short time, very frequently. The optimized method described above makes it possible to optimize the management of these updates efficiently and with the minimum expenditure of resources. The flexibility allowed by the optimized management of the UMSPs facilitates the generation of multiple new applications, since it allows the secure update of CAs, and at the same time their transmission independently of the evolution of the content of the same, in both cases allowing the certification of ownership and content of each UMSP.

The interface component 330 is configured to perform various aspects of a method. In one aspect, the ownership of a UMSP is verified, by receiving as input the UMSP identifier, and communicating with the ownership component, the ownership of the UMSP is validated. If the result is negative, it proceeds to verify in the initial owner storage means, and validate the ownership of the UMSP. If the result is positive, the UMSP owner is positively validated. On the other hand, if the result is negative, it means that the UMSP does not exist or is not stored in that Layer 1 network, or the unique identifier provided is wrong.

In another aspect, the interface component verifies the content of a UMSP, by receiving as input the UMSP identifier, and communicating with the content component, to validate the content of the UMSP, or to validate, by extracting application data, the application wherein said UMSP is located.

In another aspect, the interface component performs new owner write actions, configured to receive as input the UMSP identifier, and communicate with the ownership component, to update the UMSP owner from the previous owner to the new owner.

Next, an example operation of the optimized method for updating digital content is described with reference to FIG. 4, wherein users are owners of CAs and interact with a DApp.

In an initial configuration step, unique identifiers to be assigned to new users are generated. This registration allows subsequently creating and modifying the attributes of the CAs. A new CA is also generated within the DApp as a unique multi-segment packet of content data, UMSP, comprising at least two segments. Among other actions (such as verifying user legitimacy), the initial owner identifier is assigned to the primary segment and other content, for example, CA attributes, is assigned to the second, and subsequent, segments, and the UMSP is stored in DLT networks, each segment in separate DLT storages. Typically these initial actions can be performed by the content component 320 of the DApp.

The owner then interacts with the off-chain DApp. At a certain point, it becomes necessary to update the attributes of the on-chain CA (that is, in the DLT networks), as they have evolved, or have been modified. This is done by receiving 410 a request for updating attributes, comprising at least the UMSP identifier, and the data to be updated, as well as any other data to verify the legitimacy of the sender of the request.

At step 420, an update action, or write, of the attributes, is performed on the second segment of the UMSP (after user legitimacy check). To this end, transparently to the user, the interface component 330 interacts with the content component 320 to perform this update. This communication comprises using the UMSP identifier received together with the attributes update request, which request comprises the attributes to be updated, to determine which segment is to be updated, together with the corresponding segment address. Next, the content of the determined segment is modified with the received attributes. In the meantime, the user continues its off-chain interaction within the DApp.

In other aspects, the attributes data of all corresponding CAs is recorded in summarized format (for example, via a Merkle root). In these cases, the creation and update operate in a similar fashion, always checking that requests come from legitimate users, however updating, or concatenating, the summarized data, potentially acting on multiple CAs.

After a few interactions, the CA is desired to be transmitted to another user (either inside or outside the DApp). At step 450, upon receiving an ownership update request, the transmission of the UMSP (representing the CA) between the two users is carried out by the process of updating 460 the unique identifiers of the owners, replacing the previous one with the new one. For this purpose, the request arrives at the interface component 330. This request contains i) the UMSP identifier, ii) data about the attributes to be certified of the CA, iii) data about the current ownership of the CA to be certified, iv) optional data intended to allow the transfer of ownership of the CA, such as orders signed by the current owner, and/or the desired new owner.

First, the interface component 330 communicates with the ownership component 310, communicating to it the UMSP identifier received along with the ownership update request, which request comprises the new user identifier to be updated, in order to validate which is the current owner of the UMSP to be updated.

As this is the first time the UMSP is transmitted, the ownership component returns null, as it has no record for that UMSP. Consequently, the interface component repeats the validation step with the content component 320. This time, the owner of the UMSP is validated, and the interface component 330 identifies which segment to update. Next, the interface component 330 interacts with the ownership component 310 to initialize a new record, which record represents the main segment comprising the same unique UMSP identifier and the new user identifier.

Conversely, if this was not the first time the UMSP was transmitted, the ownership component 310 would positively validate the owner of the UMSP, and would proceed to replace the previous owner identifier with the new owner identifier in the ownership component 310. In both cases, it is the ownership component 310 wherein the updated ownership information for the already transmitted UMSPs is contained. The user meanwhile continues its off-chain interaction within the DApp.

At this point, the same CA has been independently updated in two independent records, instead, it is transmitted as a unique UMSP between users. At the same time, any user is assured that the UMSP is unique and non-fungible, as the system does not allow duplication of this same CA. The attributes and ownership update steps can be carried out as many times as necessary. In the meantime, any user (either of the two parties in the transmission, or any third party), can request to check the CA content data. At any point in the interaction, validation of the unique identifier, ownership, or attributes, or any other content (not depicted in the drawing) can be requested.

When the content data is stored in unprocessed form, the properties of DLT networks provide assurance against malicious tampering, as the DLT code is able to verify that all the necessary conditions for ownership change are present before modifying it. In contrast, when this data is stored in some other summarized (encrypted or compressed) format, the DLT code is executed to perform these checks prior to writing the new ownership status. To endow these CAs with the same security properties, a challenge step is provided for summarized content data. Therefore, the ownership component 310 and the interface component 330 are configured to perform challenge processing to prevent the stored summary from being erroneous (either intentionally or unintentionally).

To do so, content data from multiple UMSPs is updated in a batched fashion, with a single transaction with the DLT. To this end, at certain periodicity, or manually, a new summary is produced, and communicates with the DLT to update the state of the records (either overwriting or concatenating) only with the new summary.

Furthermore, additional data 318 is stored together in the ownership component 310 each time a new summary is written. This additional data allows certifying the intermediate summaries that would have been obtained by applying each of a chain of ownership updates (wherein the summary is the result of applying multiple ownership change operations as described in the preceding paragraphs).

In the interface module 330, a challenge module 338 is configured to verify the last (most current, or final) summary by verifying one of the intermediate summaries. To this end, the challenge module 338 is configured to receive as input some challenge data corresponding to a particular ownership transfer to be checked, read the additional data 318, and execute the verification steps (of the interface module described above) to check whether the summary subsequent to this ownership change is obtained by the correct application over the state corresponding to the previous summary. In other words, the challenge module recomputes the summary in question using the previous summary and the corresponding additional data. In this way, a challenger can always recompute all stored summaries.

In some implementations, this verification may require several interactions with the challenge module 338 in order to provide additional data to enable the final verification, for example, in the case of needing to reproduce a string of sequentially stored summaries. In case a negative verification results, that is, the stored summary is erroneous, the error is corrected. This correction can be carried out in several ways, for example, from deleting the erroneous summary while waiting for another one to be written, to replacing it with a previous verified one. In case of a positive verification, the correction of the challenged summary is validated.

Therefore, a new format of representing a CA in a DLT network, by means of a unique multi-segment packet of content data, has been described. This new format allows implementing an optimized digital content update system and method in DLT environments. The process allows multiple sub-processes to be carried out on different user groups simultaneously, while ensuring that content is available at all times. This simple operation allows potentially hundreds of thousands of DLT content update processes to be performed globally among millions of users spread across multiple unconnected groups. As a single digital content update operation is performed, it allows countless other operations to be performed on the same content in the meantime. Thus, the update method is optimized for minimum consumption of computational, memory, or processor resources. In short, the update method is safe and efficient.

Applications

The applications of the enhanced DLT system are manifold, and various technical advantages are obtained depending on the case.

In a first application example (**Example 1**), the application of the described system to a Massive Multiplayer Online Game (MMOG) DApp, for example, a soccer manager game, is considered. This type of game involves a league of soccer teams, each team comprising a number of virtual players. Each player is defined by a set of parameters, for example, strength, speed, skill, ability, and so on. As the team progresses through the league, it wins, loses or draws matches. Each player and each team is scored according to the result of the matches, and the way the team and its players are managed by the MMOG user. Therefore, after a period of time, there will be players and/or teams that have very high parameters and may be of interest to other MMOG users. It is even possible that there will be some star players with such a unique parameterization that may be of interest to other non-MMOG users.

Herein, the virtual players correspond to CAs that can be transmitted as unique multi-segment packets of content data between MMOG users. Once a player is transmitted from a transmitting user to a receiving user, the player becomes the ownership of the receiving user, who can incorporate him into his virtual team. Unlike other soccer manager games, in this case the content actually belongs to the MMOG users, and not to the DApp manager that manages the MMOG game. As they are crypto-assets in DLT networks, the contents belong to whoever has the private key of the content. In this case, the private key of all players is transmitted to their MMOG users when the team is generated, and subsequently, when update operations are completed. In addition, the DApp manager can continue to evolve the content of the players, or their attributes, as the CAs are used and the owners interact with the DApp using their players and their teams.

As an example, to give an idea of the magnitude and volume of data generated, in a real case, there may be 15 million matches played between 30 million players every hour, requiring, on a global level, the storage of the result of at least 360 million matches every day in the DLT network. This high degree of interaction can result in thousands of virtual players being updated daily. It is apparent to the skilled person that existing DLT networks are completely incapable of making this type of DApp a reality, whereas the features of the invention allow very frequent updating of this immense amount of data in an optimized manner.

In a second application example (**Example 2**), the application of the described system to a DApp of the Internet of Things, IOT environment, for example, a weather validator, is considered. This example addresses the need to store in network 1 immutable values from sensor readings that other entities will need to verify and use. For example, storing in the DLT network those meteorological data (atmospheric temperature, atmospheric pressure, wind, earth tremors, and so on) that an insurance entity can reliably reference for its decision making regarding an incident it is managing. This type of application involves a list of areas in which sensors automatically emit their measurements.

The sensors may also belong to a secret user who is responsible for maintaining and providing their multiple sensor data. The sensor data may be packaged and transmitted as unique multi-segment packets of content data. As an example, the insurance company may be interested in acquiring ownership of a packet of content, or a stream of content packets. The DLT networks not only serve as a large database to store all the generated sensor data, but also to store the ownership of the generated content, as well as its movement and transmission history. As an example, to give an idea of the magnitude and volume of data generated, in a real case, there may be 20 billion sensors broadcasting every hour, requiring, globally, the storage of the result of at least 480 billion data every day in the DLT network. It is apparent to the skilled person that existing DLT networks are completely incapable of making this type of DApp a reality, whereas the features of the invention allow very frequent updating of this immense amount of data in an optimized manner. While the ownership of each unique multi-segment packet of content data can be passed between different users, a DApp manager, for example, an insurance company, can modify the value of such a packet as circumstances dictate.

In a third example application (**Example 3**), a marketplace of digital artworks, for example 'paintings', 'images' or 'music', is considered. In this case, the content of each work may be stored in uncompressed format on network 1 or, more optimally, in summarized (or ultra-compressed) format. This type of market is accustomed to using the auction method. In this case each unique multi-segment packet of content data would represent a work, or part of a work. While ownership can be passed between different users, a DApp manager, for example, an art dealer, or the artist himself, can modify the value of the packet according to the circumstances.

In a fourth example application (**Example 4**), similar to the third example, but with digital identifiers of objects that exist in the physical world, for example, an identifier that refers to a sneaker of a particular brand, which sneaker belongs to a celebrity player, or any other famous person. In this case the digital twin of such a real sneaker is the unique multi-segment packet of content data, and can be transmitted between users. As an example, the DApp manager, in this case the owner of the real sneaker, or the company in charge of its image, can modify the attributes of the digital twin, for example, representing the passage of time, or the wear of the same, or various marks that give it uniqueness.

Therefore, the inventors have developed different aspects implemented as a new multi-segment packet format that allows different content of the same CA to be updated independently, however, the CA remains unique as its non-fungible property is guaranteed. The characteristics of the new packet format define the configuration of the system components and the steps of the method acting on the unique multi-segment packet. Because of this interrelationship, the technical characteristics of the system and the method are defined in terms that inherently comprise the technical characteristics of the data structure.

This new unique multi-segment packet format enables DLT system optimization to carry out multiple transmissions of CAs between users of multiple unconnected groups through a process capable of involving a potentially huge number of interactions between users in a reliable, secure, and efficient manner. By enabling the interface between any type of existing Layer 1 DLT networks, it does not require the complex, time-consuming, costly and highly risky process of generating new Layer 1 DLT networks. This opens up the range of possible DLT network applications to an infinite number according to the needs of society, covering much more than just carrying out DLT payments, for example, applications in Big Data, IOT, Web 3, MMOG, or any other environment that needs the trust provided by the immutability of data stored in DLT networks. The reliable, secure, and efficient updating of content between different users will enable the adoption of DLT technology in all these environments.

The new packet format, system and method, enables secure and scalable update of unique packets of digital content, while allowing in-chain verification of the content thereof. In detail, it allows i) content verification at any time since the creation of the CA (not only the current content, but all previous states as well); ii) to perform in-chain verification via smart contracts; iii) for the content of CAs to change, or evolve, over time, in a scalable way for a very large number of CAs; (iv) allows CA creators to manage the evolution of content as the CA is passed between different owners; and (v) allows CA creators to manage the evolution of content without necessarily being restricted to using the smart contracts of a particular Layer 1 network, as they can outsource this management to their own external networks.

In addition, the DApp manager does not hold or store the private key of the content, which is always held by the current owner of the content in question, resulting in a secure mode of content management. Upon completion of an update, the recipient of the content is the new custodian of the content's private key, and the change of ownership is recorded in the distributed records of the DLT networks for anyone to reference. Again, the secret key does not pass through the hands of the DApp manager, minimizing the potential for malpractice by DApp managers, or their operators. The invention provides protection against double-payment, preventing any transmitting user from benefitting from transmitting more than once its content, for example, to two different receiving users. All this while allowing simultaneous interaction, in relation to the same content, between multiple users from different and unconnected groups, ensuring that there will be only one final receiving user as the new owner of the content.

Thus, the enhanced DLT system allows the execution of DApps that require frequent interaction between multiple users sustained over time in an efficient and optimal way. This facilitates the generation and execution of DApps in the DLT environment, providing the missing support for them to become a reality.

It is further understood that the described embodiments and aspects may be implemented by various means in hardware, software, firmware, middleware, microcode, or any combination thereof. Various aspects or features described may be implemented, on the one hand, as a method or procedure or function, and on the other hand, as an apparatus, device, system, or computer program accessible by any computer-readable device, carrier, or medium. The described procedures or algorithms can be implemented directly in hardware, in a software module executed by a processor, or a combination of the two.

The various media may comprise software modules resident in RAM memory, flash memory, ROM memory, EPROM memory, EEPROM memory, registers, hard disk, removable disk, a CD-ROM, or any other type of storage medium known in the art.

The various means may comprise logic locks, modules, and circuits may be implemented or carried out by a general purpose processor, a digital signal processor (DSP), an application specific integrated circuit (ASIC), an field programmable gate array (FPGA), or other programmable logic, discrete gate or transistor logic devices, discrete hardware components, or any combination thereof designed to carry out the described functions. A general purpose processor may be a microprocessor, but alternatively, the processor may be a conventional processor, controller, microcontroller, or state machine.

The various media may comprise computer-readable media including, but not limited to, magnetic storage devices (for example, hard disks, floppy disks, magnetic strips, and the like), optical disks (for example, compact disks CD or versatile DVDs, and the like), smart cards, and temporary flash storage drives (for example, EPROM, pen card, key drive, and the like). Additionally, the described array of storage media may represent one or more devices and/or computer-readable media for storing information. The term computer-readable medium may comprise, without being limited thereto, a variety of media capable of storing, saving, or transporting instructions and/or data. Additionally, a computer program product may comprise a computer-readable medium with one or more instructions or operating codes for causing a computer to perform the described functions once executed on the computer.

What has been described comprises one or more embodiments by way of example. It is of course not possible to describe every conceivable combination, or permutation, of the components and/or methodologies for the purpose of describing the aforementioned embodiments. Instead, the skilled person will realize that many other combinations and permutations of various realizations are possible within the inventive concept after a straightforward and objective reading of this disclosure. Accordingly, it is intended to embrace all such alterations, modifications and variations that fall within the scope of the appended claims.

Further, the skilled person in the art would understand that the various embodiments may be implemented in hardware, software, firmware, middleware, microcode, or any combination thereof. Various aspects or features described may be implemented, on the one hand, as a method or procedure or function, and on the other hand, as an apparatus, device, system, or computer program accessible by any computer-readable device, carrier, or medium. The described procedures or algorithms may be implemented directly in hardware, in a software module executed by a processor, or a combination of the two. The various media may comprise software modules resident in RAM memory, flash memory, ROM memory, EPROM memory, EEPROM memory, registers, hard disk, removable disk, a CD-ROM, or any other type of storage medium known in the art.

The various means may comprise logic locks, modules, and circuits may be implemented or carried out by a general purpose processor, a digital signal processor (DSP), an application specific integrated circuit (ASIC), a field programmable gate array (FPGA), or other programmable logic, discrete gate or transistor logic devices, discrete hardware components, or any combination thereof designed to carry out the described functions. A general purpose processor may be a microprocessor, but in the alternative, the processor may be a conventional processor, controller, microcontroller, state machine, or embedded processor.

The various media may comprise computer-readable media including, but not limited to, magnetic storage devices (for example, hard disks, floppy disks, magnetic strips, and the like), optical disks (for example, CD compact disks or versatile DVDs, and the like), smart cards, and temporary flash storage drives (for example, EPROMs). Additionally, the described array of storage media may represent one or more devices and/or computer-readable media for storing information. The term computer-readable medium may comprise, without being limited thereto, a variety of media capable of storing, saving, or transporting instructions and/or data. Additionally, a computer program product may comprise a computer-readable medium with one or more instructions or operating codes for causing a computer to perform the described functions once executed on the computer.

What has been described comprises several realizations by way of example. As it is neither possible nor feasible to describe in detail all the variety of combinations and permutations of the inventive concept which would give rise to a large number of realizations, the drafter understands that the person in the trade would derive, after a direct and objective reading of this disclosure, the various possible permutations and combinations, without departing from the general inventive concept described. Therefore, the principal embodiments have been described, it being understood that they comprise the other combinations, variations and modifications.

Certain additional aspects or examples are described in the following:
A unique multi-segment packet of content data, UMSP, deployed in a distributed manner in a programmable peer-to-peer distributed ledger network, DLT, configured to run decentralized applications, wherein the UMSP comprises at least two segments, a main segment and at least one other segment, each stored in a separate memory of at least two separate memories of the DLT network, wherein each segment comprises a field with a same UMSP identifier and at least one field comprising information capable of certifying the content data corresponding to each segment.

The packet, wherein the field comprising information of the main segment comprises UMSP ownership data. The packet, wherein the field comprising information of the at least one other segment comprises data necessary to define the rest of the UMSP content, such as data about the attributes of the UMSP. The packet, wherein the information field comprises content data in unprocessed form. The packet, wherein the information field comprises summarized data, identifying an encoding or compression of the unprocessed content data, storing only the result of a summary algorithm, wherein the summary algorithm is a Merkle tree, or a sparse Merkle tree, or a Kate polynomial, or the result of applying a hash function to the concatenation of all the data, or any other encoding or compression algorithm.

A digital component of content deployed in a distributed manner in a programmable peer-to-peer distributed ledger network, DLT, configured to run decentralized applications, wherein the digital content component is configured for updating at least one unique multi-segment packet of content data, UMSP, wherein the digital content component comprises: digital means of updating configured to update the field comprising information of at least the one other segment of the UMSP; and digital means configured to store, in distributed storage of the DLT network, not yet updated main segments of the at least one UMSP, and the at least one other segment of the at least one UMSP.

The component, wherein the digital means of updating are configured to perform the updating: by an action of replacing the data in the information field with new data; or by an action of concatenating the new data following the previous data. The component, further comprising digital validation means configured to certify both that a UMSP identifier is stored or that it is not stored. The component, further comprising digital verification means configured to verify the validity of the information field data. The component, wherein the digital verification means are configured to receive a request comprising a UMSP identifier, extract, if present, data from the information field stored in distributed storage that corresponds to the received UMSP identifier, and return data from the information field, if present, or return non-existence information, if not present. The component, wherein if the content data has been stored in unprocessed form, the digital verification means are configured to return the raw data upon receipt of the UMSP identifier. The component, wherein if the content data has been stored in summarized form, upon receiving, in addition to the UMSP identifier, the corresponding summary, the digital verification means are configured to compare the received summary with the stored one corresponding to the received UMSP identifier, and return a positive result if both summaries are identical, or return a negative result if they are not identical. The component, wherein if the content data has been stored in summarized form, the digital verification means are configured to receive raw data and validate that the stored summary corresponds to a summary generated from information comprising the raw data. The component, comprising digital means configured to additionally store data from decentralized applications. The component, comprising digital means configured to group all UMSPs that are part of the same decentralized application. The component, wherein the digital verification means are configured to receive raw data and validate that the stored summary corresponds to a summary generated from information comprising the raw data.

A digital component of ownership deployed in a distributed manner in a programmable peer-to-peer distributed ledger network, DLT, configured to run decentralized applications, wherein the digital ownership component is configured for updating at least one unique multi-segment packet of content data, UMSP, wherein the digital ownership component comprises: digital means of updating configured to update the field comprising information of the main segment of the UMSP; and digital means configured to store, in distributed storage of the DLT network, already updated main segments of the UMSP.

The component, wherein the digital update means are configured to perform the updating: by an action of replacing the identifier of the previous owner with the identifier of the new owner; or by an action of concatenating the new identifier following the previous identifier. The component, wherein the digital update means are configured to store the information fields of multiple main segments of multiple UMSPs in a grouped manner via a single summary. The component, wherein the digital verification means are configured to receive raw data and validate that the stored summary corresponds to a summary generated from information comprising the raw data. The component, wherein the digital update means are configured to store additional data each time a new summary is written, allowing any intermediate summary to be certified by a challenge process. The component, further comprising digital validation means configured to certify both that a UMSP identifier is stored and that it is not stored. The component, wherein the digital validation means are additionally configured to verify the validity of the last UMSP owner. The component, wherein the digital validation means are configured to receive a request comprising a UMSP identifier, extract, if present, the owner identifier stored in distributed storage that corresponds to the received UMSP identifier, and return ownership information, if present, or return non-existence information, if non-existent. The component, wherein the request further comprises data about the attributes to be certified of the UMSP, and wherein the digital verification means are configured to validate that the stored summary corresponds to a summary generated from information comprising the data about the attributes.

A digital component of interface deployed in a distributed manner in a programmable peer-to-peer distributed ledger network, DLT, configured to run decentralized applications, wherein the digital interface component is configured for updating at least one unique multi-segment packet of content data, UMSP, wherein the digital interface component comprises: digital means of updating configured to update the field comprising information of the at least one UMSP, either of the main segment and/or of the at least one other segment; and digital means configured to store, in distributed storage of the DLT network, the associations between the identifier of the at least one UMSP and its multiple segments.

The component, further comprising digital verification means configured to: interface with the digital validation means of the ownership component to validate the ownership stored in the main segment of the UMSP; and interface with the digital verification means of the content component to validate the data of the information field of the at least one other segment of the UMSP. The component, wherein for an ownership validation, firstly, the digital verification means of the interface component are configured to verify the ownership by interacting with the digital validation means of the ownership component based on the ownership data to be certified, and if the result finds that the current owner differs from the proposed owner, the process terminates. The component, wherein if the result ascertains that no owner is listed for the at least one UMSP in the ownership component, the digital verification means of the interface component are configured to verify the ownership by interacting with the digital verification means of the content component based on the ownership data to be certified, and positively validate the ownership of the UMSP if the result is positive, or not allow any further operation to be carried out if the result is negative. The component, wherein the digital verification means of the interface component are configured to validate, by extracting application data, the state of the application wherein the UMSP is located. The component, wherein the field comprising information comprises summaries and corresponding additional data, and wherein the digital update means additionally comprises a challenge module configured to verify the most current summary by, using the corresponding additional data, verifying one of the intermediate summaries, and correct the summary in case a negative verification results, that is, the stored summary is erroneous. The component, wherein the correcting comprises deleting the erroneous summary or replacing it with another summary.

A digital programmable distributed ledger system for updating at least one unique multi-segment packet of content data, UMSP, the system comprising at least one programmable peer-to-peer distributed ledger network configured to run decentralized applications comprising a plurality of nodes configured to communicate directly with each other, which comprises, deployed in a distributed manner: digital storage means configured to store at least one UMSP; a digital component of content, configured to store not yet updated main segments of the at least one UMSP and configured to store and update the at least one other segment of the at least one UMSP; a digital component of ownership, configured to store and update the already updated main segments of the UMSP; and a digital component of interface, configured to interface with the digital content component and the digital ownership component to perform update and storage operations of the UMSP.

The system, wherein any component further comprises digital means for checking the legitimacy of users interacting with any component of the DLT network. The system, wherein the legitimacy is checked by verifying digital signatures of received messages using asymmetric cryptography methods. The system, wherein the UMSPs are elements appearing in a massive multiplayer game application environment. The system, wherein the UMSPs are packets of data of weather sensors in a weather validator application environment. The system, wherein the UMSPs are digital artworks in a digital artwork marketplace application environment. The system, wherein the UMSPs identify a real object.

A method in a digital component of content for updating at least one unique multi-segment packet of content data, UMSP, wherein the method comprises: updating the field comprising information of the at least one other segment of the UMSP; and storing, in distributed storage of the DLT network, not yet updated main segments of the at least one UMSP and the at least one other segment of the at least one UMSP.

The method, comprising, in the digital update means, carrying out the updating: by an action of replacing the data in the information field with new data; or by an action of concatenating the new data following the previous data. The method, further comprising, in a digital validation means, certifying both that a UMSP identifier is stored and that it is not stored. The method, further comprising, in a digital verification means, verifying the validity of the data in the information field. The method, comprising, in the digital verification means, receiving a request comprising a UMSP identifier, extracting, if present, data from the information field stored in distributed storage that corresponds to the received UMSP identifier, and returning data from the information field, if present, or returning non-existence information, if not present. The method, wherein if the content data has been stored in unprocessed form, returning the raw data upon receipt of the UMSP identifier. The method, wherein if the content data has been stored in summary form, upon receiving, in addition to the UMSP identifier, the corresponding summary, compare the received summary with the stored summary corresponding to the received UMSP identifier, and return a positive result if both summaries are identical, or return a negative result if they are not identical. The method, comprising, in the digital verification means, receiving raw data and validating that the stored summary corresponds to a summary generated from information comprising the raw data. The method, further comprising additionally storing data from decentralized applications. The method, comprising grouping all UMSPs that are part of the same decentralized application. The method, comprising, in the digital verification means, receiving raw data and validating that the stored summary corresponds to a summary generated from information comprising to the raw data.

A method in a digital component of ownership for updating at least one unique multi-segment packet of content data, UMSP, wherein the method comprises: updating the UMSP main segment information field; and storing, in distributed storage of the DLT network, already updated main segments of the UMSP.

The method, comprising, in the digital update means, carrying out the updating: by an action of replacing the identifier of the previous owner with the identifier of the new owner; or by an action of concatenating the new identifier after the previous identifier. The method, comprising, in the digital update means, storing the information fields of multiple main segments of multiple UMSPs in a grouped manner by means of a single summary. The method, comprising, in digital verification means, receiving raw data and validating that the stored summary corresponds to a summary generated from information comprising the raw data. The method, comprising, in the digital update means, storing additional data each time a new summary is written, thereby allowing any intermediate summary to be certified by a challenge process. The method, further comprising, in a digital validation means, certifying both that a UMSP identifier is stored and that it is not stored. The method, comprising, in the digital validation means, additionally verifying the validity of the last UMSP owner. The method, comprising, in the digital validation means, receiving a request comprising a UMSP identifier, extracting, if present, the owner identifier stored in distributed storage that corresponds to the received UMSP identifier, and returning ownership information, if present, or returning non-existence information, if non-existent. The method, wherein the request additionally comprises data about the attributes to be certified from the UMSP, and comprising, in the digital verification means, validating that the stored summary corresponds to a summary generated from information comprising the data about the attributes.

A method in a digital component of interface for updating at least one unique multi-segment packet of content data, UMSP, wherein the method comprises: updating the field comprising information of the at least one UMSP, either of the main segment and/or of the at least one other segment; and storing, in distributed storage of the DLT network, the associations between the identifier of the at least one UMSP and its multiple segments.

The method, further comprising, in a digital verification means; interacting with the digital validation means of the ownership component to validate the ownership stored in the main segment of the UMSP; and interacting with the digital verification means of the content component to validate the data of the information field of the at least one other segment of the UMSP. The method, wherein for an ownership validation, firstly, in the digital verification means of the interface component, verify the ownership by interacting with the digital validation means of the ownership component based on the ownership data to be certified, and if the result ascertains that the current owner differs from the proposed owner, the process terminates. The method, wherein if the result ascertains that an owner for the at least one UMSP is not listed in the ownership component, in the digital verification means of the interface component, verify the ownership by interacting with the digital verification means of the content component based on the ownership data to be certified, and positively validating the ownership of the UMSP if the result is positive, or not allowing any further operation to be carried out if the result is negative. The method, comprising, in the digital verification means of the interface component, validate, by extracting application data, the state of the application wherein the UMSP is located. The method, wherein the information field comprises summaries and corresponding additional data, and comprising, in a challenge module of the digital update means, additionally verifying the most current summary by verifying, using the corresponding additional data, one of the intermediate summaries, and correcting the summary in case a negative verification results, that is, the stored summary is erroneous. The method, wherein the correcting comprises deleting the erroneous summary or replacing it with another summary.

A method in a digital programmable distributed ledger system for updating at least one unique multi-segment packet of content data, UMSP, wherein the method comprises: storing, in digital storage means, the at least one UMSP; storing, in a digital content component, not yet updated main segments of the at least one UMSP and storing and updating the at least one other segment of the at least one UMSP; storing and updating, in a digital ownership component, the already updated main segments of the UMSP; and interacting, in a digital interface component, with the digital content component and with the digital ownership component to perform update and store operations of the UMSP.

The method, further comprising checking the legitimacy of users interacting with any component of the DLT network. The method, wherein the legitimacy is checked by verifying digital signatures of received messages using asymmetric cryptography methods. The method, wherein the UMSPs are elements appearing in a massive multiplayer game application environment. The method, wherein the UMSPs are packets of data of weather sensors in a weather validator application environment. The method, wherein the UMSPs are digital artworks in a digital artwork marketplace application environment. The method, wherein the UMSPs identify a real object.

A computer program comprising instructions, once executed on a processor, for carrying out the method steps.

A computer-readable medium comprising instructions, once executed on a processor, for carrying out the method steps.

## Claims

1. A unique multi-segment packet of content data, UMSP, deployed in a distributed manner in programmable peer-to-peer distributed ledger networks, DLT, configured to run decentralized applications, wherein the UMSP comprises at least two segments, a main segment and at least one other segment, each stored in a separate memory of at least two separate memories of DLT networks, wherein each segment comprises a field with a same UMSP identifier and at least one field comprising information capable of certifying the content data corresponding to each segment.

2. The packet of claim 1, wherein the field comprising information of the main segment comprises UMSP ownership data.

3. The packet of claim 2, wherein the field comprising information of the at least one other segment comprises data necessary to define the rest of the UMSP content, such as data about the attributes of the UMSP.

4. The packet of claim 2, wherein the information field comprises content data in unprocessed form.

5. The packet of claim 2, wherein the information field comprises summarized data, identifying an encoding or compression of the unprocessed content data, storing only the result of a summary algorithm, wherein the summary algorithm is a Merkle tree, or a sparse Merkle tree, or a Kate polynomial, or the result of applying a hash function to the concatenation of all the data, or any other encoding or compression algorithm.

6. A digital component of content deployed in a distributed manner in programmable peer-to-peer distributed ledger networks, DLT, configured to run decentralized applications, wherein the digital content component is configured for updating at least one unique multi-segment packet of content data, UMSP, according to claim 1, wherein the digital content component comprises:

   digital means of updating configured to update the field comprising information of at least the one other segment of the UMSP; and
   digital means configured to store, in distributed storage of the DLT networks, not yet updated main segments of the at least one UMSP, and the at least one other segment of the at least one UMSP.

7. The component of claim 6, wherein the digital means of updating are configured to perform the updating:

   by an action of replacing the data in the information field with new data;
   or by an action of concatenating the new data following the previous data.

8. The component of claim 7, further comprising digital validation means configured to certify both that a UMSP identifier is stored or that it is not stored.

9. The component of claim 7, further comprising digital verification means configured to verify the validity of the information field data.

10. The component of claim 9, wherein the digital verification means are configured to receive a request comprising a UMSP identifier, extract, if present, data from the information field stored in distributed storage that corresponds to the received UMSP identifier, and return data from the information field, if present, or return non-existence information, if not present.

11. The component of claim 10, wherein if the content data has been stored in unprocessed form, the digital verification means are configured to return the raw data upon receipt of the UMSP identifier.

12. The component of claim 10, wherein if the content data has been stored in summarized form, upon receiving, in addition to the UMSP identifier, the corresponding summary, the digital verification means are configured to compare the received summary with the stored one corresponding to the received UMSP identifier, and return a positive result if both summaries are identical, or return a negative result if they are not identical.

13. The component of claim 10, wherein if the content data has been stored in summarized form, the digital verification means are configured to receive raw data and validate that the stored summary corresponds to a summary generated from information comprising the raw data.

14. The component of claim 7, comprising digital means configured to additionally store data from decentralized applications.

15. The component of claim 14, comprising digital means configured to group all UMSPs that are part of the same decentralized application.

16. The component of claim 15, wherein the digital verification means are configured to receive raw data and validate that the stored summary corresponds to a summary generated from information comprising the raw data.

17. A digital component of ownership deployed in a distributed manner in programmable peer-to-peer distributed ledger networks, DLT, configured to run decentralized applications, wherein the digital ownership component is configured for updating at least one unique multi-segment packet of content data, UMSP, according to claim 1, wherein the digital ownership component comprises:

digital means of updating configured to update the field comprising information of the main segment of the UMSP; and
digital means configured to store, in distributed storage of the DLT networks, already updated main segments of the UMSP.

18. The component of claim 17, wherein the digital update means are configured to perform the updating:

by an action of replacing the identifier of the previous owner with the identifier of the new owner;
or by an action of concatenating the new identifier following the previous identifier.

19. The component of claim 18, wherein the digital update means are configured to store the information fields of multiple main segments of multiple UMSPs in a grouped manner via a single summary.

20. The component of claim 19, wherein the digital verification means are configured to receive raw data and validate that the stored summary corresponds to a summary generated from information comprising the raw data.

21. The component of claim 18, wherein the digital update means are configured to store additional data each time a new summary is written, allowing any intermediate summary to be certified by a challenge process.

22. The component of claim 18, further comprising digital validation means configured to certify both that a UMSP identifier is stored and that it is not stored.

23. The component of claim 22, wherein the digital validation means are additionally configured to verify the validity of the last UMSP owner.

24. The component of claim 22, wherein the digital validation means are configured to receive a request comprising a UMSP identifier, extract, if present, the owner identifier stored in distributed storage that corresponds to the received UMSP identifier, and return ownership information, if present, or return non-existence information, if non-existent.

25. The component of claim 22, wherein the request further comprises data about the attributes to be certified of the UMSP, and wherein the digital verification means are configured to validate that the stored summary corresponds to a summary generated from information comprising the data about the attributes.

26. A digital component of interface deployed in a distributed manner in programmable peer-to-peer distributed ledger networks, DLT, configured to run decentralized applications, wherein the digital interface component is configured for updating at least one unique multi-segment packet of content data, UMSP, according to claim 1, wherein the digital interface component comprises:

digital means of updating configured to update the field comprising information of the at least one UMSP, either of the main segment and/or of the at least one other segment; and
digital means configured to store, in distributed storage of the DLT networks, the associations between the identifier of the at least one UMSP and its multiple segments.

27. The component of claim 26, further comprising digital verification means configured to:

interface with the digital validation means of the ownership component to validate the ownership stored in the main segment of the UMSP; and
interface with the digital verification means of the content component to validate the data of the information field of the at least one other segment of the UMSP.

28. The component of claim 27, wherein for an ownership validation, firstly, the digital verification means of the interface component are configured to verify the ownership by interacting with the digital validation means of the ownership component based on the ownership data to be certified, and if the result finds that the current owner differs from the proposed owner, the process terminates.

29. The component of claim 28, wherein if the result ascertains that no owner is listed for the at least one UMSP in the ownership component, the digital verification means of the interface component are configured to verify the ownership by interacting with the digital verification means of the content component based on the ownership data to be certified, and positively validate the ownership of the UMSP if the result is positive, or not allow any further operation to be carried out if the result is negative.

30. The component of claim 27, wherein the digital verification means of the interface component are configured to validate, by extracting application data, the state of the application wherein the UMSP is located.

31. The component of claim 27, wherein the field comprising information comprises summaries and corresponding additional data, and wherein the digital update means additionally comprises a challenge module configured to verify the most current summary by, using the corresponding additional data, verifying one of the intermediate summaries, and correct the summary in case a negative verification results, that is, the stored summary is erroneous.

32. The component of claim 31, wherein the correcting comprises deleting the erroneous summary or replacing it with another summary.

33. A digital programmable distributed ledger system for updating at least one unique multi-segment packet of content data, UMSP, the system comprising at least one programmable peer-to-peer distributed ledger network configured to run decentralized applications comprising a plurality of nodes configured to communicate directly with each other, which comprises, deployed in a distributed manner:

digital storage means configured to store at least one UMSP of claim 1;
a digital component of content according to claim 6, configured to store not yet updated main segments of the at least one UMSP and configured to store and update the at least one other segment of the at least one UMSP;

a digital component of ownership according to claim 17, configured to store and update the already updated main segments of the UMSP; and

a digital component of interface according to claim 26, configured to interface with the digital content component and the digital ownership component to perform update and storage operations of the UMSP.

34. The system of any one of the preceding claims, wherein any component further comprises digital means for checking the legitimacy of users interacting with any component of the DLT networks.

35. The system of claim 34, wherein the legitimacy is checked by verifying digital signatures of received messages using asymmetric cryptography methods.

36. The system of any one of the preceding claims, wherein the UMSPs are elements appearing in a massive multiplayer game application environment.

37. The system of any one of the preceding claims, wherein the UMSPs are packets of data of weather sensors in a weather validator application environment.

38. The system of any one of the preceding claims, wherein the UMSPs are digital artworks in a digital artwork marketplace application environment.

39. The system of any one of the preceding claims, wherein the UMSPs identify a real object.

40. A method in a digital component of content according to claim 6 for updating at least one unique multi-segment packet of content data, UMSP, according to claim 1, wherein the method comprises:

updating the field comprising information of the at least one other segment of the UMSP; and
storing, in distributed storage of the DLT networks, not yet updated main segments of the at least one UMSP and the at least one other segment of the at least one UMSP.

41. The method of claim 40, comprising, in the digital update means, carrying out the updating:

by an action of replacing the data in the information field with new data;
or by an action of concatenating the new data following the previous data.

42. The method of claim 41, further comprising, in a digital validation means, certifying both that a UMSP identifier is stored and that it is not stored.

43. The method of claim 41, further comprising, in a digital verification means, verifying the validity of the data in the information field.

44. The method of claim 43, comprising, in the digital verification means, receiving a request comprising a UMSP identifier, extracting, if present, data from the information field stored in distributed storage that corresponds to the received UMSP identifier, and returning data from the information field, if present, or returning non-existence information, if not present.

45. The method of claim 44, wherein if the content data has been stored in unprocessed form, returning the raw data upon receipt of the UMSP identifier.

46. The method of claim 44, wherein if the content data has been stored in summary form, upon receiving, in addition to the UMSP identifier, the corresponding summary, compare the received summary with the stored summary corresponding to the received UMSP identifier, and return a positive result if both summaries are identical, or return a negative result if they are not identical.

47. The method of claim 46, comprising, in the digital verification means, receiving raw data and validating that the stored summary corresponds to a summary generated from information comprising the raw data.

48. The method of claim 41, further comprising additionally storing data from decentralized applications.

49. The method of claim 48, comprising grouping all UMSPs that are part of the same decentralized application.

50. The method of claim 49, comprising, in the digital verification means, receiving raw data and validating that the stored summary corresponds to a summary generated from information comprising to the raw data.

51. A method in a digital component of ownership according to claim 17 for updating at least one unique multi-segment packet of content data, UMSP, according to claim 1, wherein the method comprises:

updating the UMSP main segment information field; and
storing, in distributed storage of the DLT networks, already updated main segments of the UMSP.

52. The method of claim 51, comprising, in the digital update means, carrying out the updating:

by an action of replacing the identifier of the previous owner with the identifier of the new owner;
or by an action of concatenating the new identifier after the previous identifier.

53. The method of claim 52, comprising, in the digital update means, storing the information fields of multiple main segments of multiple UMSPs in a grouped manner by means of a single summary.

54. The method of claim 53, comprising, in digital verification means, receiving raw data and validating that the stored summary corresponds to a summary generated from information comprising the raw data.

55. The method of claim 52, comprising, in the digital update means, storing additional data each time a new summary is written, thereby allowing any intermediate summary to be certified by a challenge process.

56. The method of claim 52, further comprising, in a digital validation means, certifying both that a UMSP identifier is stored and that it is not stored.

57. The method of claim 56, comprising, in the digital validation means, additionally verifying the validity of the last UMSP owner.

58. The method of claim 56, comprising, in the digital validation means, receiving a request comprising a UMSP identifier, extracting, if present, the owner identifier stored in distributed storage that corresponds to the received UMSP identifier, and returning ownership information, if present, or returning non-existence information, if non-existent.

59. The method of claim 56, wherein the request additionally comprises data about the attributes to be certified from the UMSP, and comprising, in the digital verification means, validating that the stored summary corresponds to a summary generated from information comprising the data about the attributes.

60. A method in a digital component of interface according to claim 26 for updating at least one unique multi-segment packet of content data, UMSP, according to claim 1, wherein the method comprises:

updating the field comprising information of the at least one UMSP, either of the main segment and/or of the at least one other segment; and
storing, in distributed storage of the DLT networks, the associations between the identifier of the at least one UMSP and its multiple segments.

61. The method of claim 60, further comprising, in a digital verification means;

interacting with the digital validation means of the ownership component to validate the ownership stored in the main segment of the UMSP; and
interacting with the digital verification means of the content component to validate the data of the information field of the at least one other segment of the UMSP.

62. The method of claim 61, wherein for an ownership validation, firstly, in the digital verification means of the interface component, verify the ownership by interacting with the digital validation means of the ownership component based on the ownership data to be certified, and if the result ascertains that the current owner differs from the proposed owner, the process terminates.

63. The method of claim 62, wherein if the result ascertains that an owner for the at least one UMSP is not listed in the ownership component, in the digital verification means of the interface component, verify the ownership by interacting with the digital verification means of the content component based on the ownership data to be certified, and positively validating the ownership of the UMSP if the result is positive, or not allowing any further operation to be carried out if the result is negative.

64. The method of claim 61, comprising, in the digital verification means of the interface component, validate, by extracting application data, the state of the application wherein the UMSP is located.

65. The method of claim 61, wherein the information field comprises summaries and corresponding additional data, and comprising, in a challenge module of the digital update means, additionally verifying the most current summary by verifying, using the corresponding additional data, one of the intermediate summaries, and correcting the summary in case a negative verification results, that is, the stored summary is erroneous.

66. The method of claim 65, wherein the correcting comprises deleting the erroneous summary or replacing it with another summary.

67. A method in a digital programmable distributed ledger system according to claim 33 for updating at least one unique multi-segment packet of content data, UMSP, according to claim 1, wherein the method comprises:

    storing, in digital storage means, the at least one UMSP;
    according to the method of claim 40, storing, in a digital content component, not yet updated main segments of the at least one UMSP and storing and updating the at least one other segment of the at least one UMSP;
    storing and updating, according to the method of claim 51, in a digital ownership component, the already updated main segments of the UMSP; and
    interacting, according to the method of claim 60, in a digital interface component, with the digital content component and with the digital ownership component to perform update and store operations of the UMSP.

68. The method of any one of the preceding claims, further comprising checking the legitimacy of users interacting with any component of the DLT networks.

69. The method of claim 68, wherein the legitimacy is checked by verifying digital signatures of received messages using asymmetric cryptography methods.

70. The method of any one of the preceding claims, wherein the UMSPs are elements appearing in a massive multiplayer game application environment.

71. The method of any one of the preceding claims, wherein the UMSPs are packets of data of weather sensors in a weather validator application environment.

72. The method of any one of the preceding claims, wherein the UMSPs are digital artworks in a digital artwork marketplace application environment.

73. The method of any one of the preceding claims, wherein the UMSPs identify a real object.

74. A computer program comprising instructions, once executed on a processor, for carrying out the method steps of any one of claims 40 to 73.

75. A computer-readable medium comprising instructions, once executed on a processor, for carrying out the method steps of any one of claims 40 to 73.

# FIG. 1

FIG. 1A

FIG. 1B

FIG. 1C

EP 4 318 266 A1

# FIG. 2

Segment 1
210

**addr 1**

Unique ID 1 212

Content 1: Ownership 215

Segment s
220

**addr s**

Unique ID 1 222

Content 1: attributes n 225
Content n+1: attributes n+1

Segment S
230

**addr S**

Unique ID 1 232

Content N: ... 235

| UMSP Unique ID | addr |
|---|---|
| 1 | 1 |
| | s |
| | S |
| p | 10 |
| | 11 |
| | 12 |
| P | 71564 |
| | 89739 |

290

**DLT**

200

EP 4 318 266 A1

# FIG. 3

300

310

312

314    316

320

322

324

328    DApp 1
       DApp D
329    InitOwner 1
       InitOwner N

330

290

336

335

338

334

332

**FIG. 4**

Off Chain

Interaction
users <-> DApp

CA_1:
    Attribute 1 ->
    Attribute 2 ->
    Attribute 3 -> ...
    Owner 1 -> Owner 2

CA_p:
   - Attribute 1 ->
    Attribute 2
   - Owner 1 -> Owner 2
    -> Owner ...

CA_P:
   - Attribute 1 ->
    Attribute 2
   - Owner 1

On Chain

A

B

410

450

420

460

400

EP 4 318 266 A1

## INTERNATIONAL SEARCH REPORT

| International application No. |
|---|
| PCT/ES2021/070252 |

### A. CLASSIFICATION OF SUBJECT MATTER

*G06F16/30* (2019.01)
*G06F17/40* (2006.01)
According to International Patent Classification (IPC) or to both national classification and IPC

### B. FIELDS SEARCHED

Minimum documentation searched (classification system followed by classification symbols)
G06F

Documentation searched other than minimum documentation to the extent that such documents are included in the fields searched

Electronic data base consulted during the international search (name of data base and, where practicable, search terms used)

EPODOC, INVENES, WPI, INTERNET

### C. DOCUMENTS CONSIDERED TO BE RELEVANT

| Category* | Citation of document, with indication, where appropriate, of the relevant passages | Relevant to claim No. |
|---|---|---|
| X | US 2018198617 A1 (DROUIN SYLVIO HERVE ET AL.) 12/07/2018, paragraphs [2 - 3]; paragraphs [17 - 21]; paragraphs [30 - 50]; paragraphs [58 - 110]; paragraph [117]; paragraphs [120 - 121]; | 1-25, 40-59, 74-75 |
| Y | claim 1, claims 3-6; claim 8, claims 10-13; figures 2 - 4. Figures 6 - 9. | 26-39, 60-73 |
| Y | US 2020328891 A1 (DROUOT QUENTIN) 15/10/2020, paragraph [4]; paragraphs [11 - 36]; figures 1 - 5. | 26-39, 60-73 |

☒ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 26/11/2021 | **(01/12/2021)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | J. Vazquez Burgos |
| | Telephone No. 91 3495513 |

Form PCT/ISA/210 (second sheet) (January 2015)

## INTERNATIONAL SEARCH REPORT

International application No.

PCT/ES2021/070252

| C (continuation). | | DOCUMENTS CONSIDERED TO BE RELEVANT | |
|---|---|---|---|
| Category * | | Citation of documents, with indication, where appropriate, of the relevant passages | Relevant to claim No. |
| L | | WILLIAM ENTRIKEN et al.. EIP 721: ERC-721 Non-Fungible Token Standard. Ethereum Improvement Proposals, n°. 721 Https://github.com/ethereum/eips., 24/01/2018 [on line] [retrieved on 19/11/2021]. Retrieved from <URL: https://eips.ethereum.org/EIPS/eip-721> Paragraph "especification" | 1, 7-8, 10 |
| A | | Merkle tree. Wikipedia, 12/03/2021 [on line][retrieved the 19/11/2021]. Retrieved from <URL: https://in.wikipedia.org/w/index.php?title=Merkle_tree&oldid=1011746934> Paragraphs 1-2 | 19 |
| A | | MATT LOCKYER, NICK MUDGE, JORDAN SCHALM. EIP-998: ERC-998 Composable Non-Fungible Token Standard. 07/07/2018 [on line] [retrieved on 19/11/2021]. Retrieved from <URL: https://eips.ethereum.org/EIPS/eip-998> Paragraph "specification" | 1 |
| A | | Message authentication code. Wikipedia, 04/04/2021 [on line] [retrieved on 18/11/2021]. Retrieved of <URL: https://in.wikipedia.org/w/index.php?title=Message_authentication_code&oldid=1015938204> Paragraphs 1-6 | 1, 9, 12-13 |
| A | | L. LESAVRE et al. Blockchain Networks: Token Design and Management Overview. National Institute of Standards And Technology – U.s. Department of Commerce, 09/02/2021 [on line][retrieved the 11/11/2021]. Retrieved from <URL: https://csrc.nist.gov/publications/detail/nistir/8301/final> Paragraphs 2.2, 5.1.3.1, 5.1.3.2, 5.3 | 4-5, 9-10, 12-13, 23, 27, 33 |
| L | | DYLAN YAGA et al.. Blockchain technology overview NIST IR 8202. Nist, 20181003 National Institute of Standards and Technology (nist)., 03/10/2018, pages 1 - 68 [on line] [retrieved on 11/11/2021]. Retrieved from <URL: https://www.nist.gov/publications/blockchain-technology-overview> , <DOI: 10.6028/NIST.IR.8202> Paragraphs 3.6, 7.3 | 4-5 |
| L | | L. LESAVRE. A Taxonomic Approach to Understanding Emerging Blockchain Identity Management Systems NIST CSWP 01142020. Nist, 20200114 National Institute of Standards and Technology (nist)., 14/01/2020, pages 1 - 62 [on line][retrieved the 16/11/2021]. Retrieved from <URL: https://csrc.nist.gov/publications/detail/white-paper/2020/01/14/a-taxonomic-approach-to-understanding-emerging-blockchain-idms/final> , <DOI: 10.6028/NIST.CSWP.01142020>Paragraphs 3.2, 3.3, 4.3 | 34-35 |

Form PCT/ISA/210 (continuation of second sheet) (January 2015)

| INTERNATIONAL SEARCH REPORT | | International application No. | |
|---|---|---|---|
| Information on patent family members | | PCT/ES2021/070252 | |
| Patent document cited in the search report | Publication date | Patent family member(s) | Publication date |
| US2018198617 A1 | 12.07.2018 | US2019158289 A1<br>US10587410 B2<br>WO2019170900 A1<br>US10225085 B2<br>US2018048735 A1<br>US9942360 B2 | 23.05.2019<br>10.03.2020<br>12.09.2019<br>05.03.2019<br>15.02.2018<br>10.04.2018 |
| US2020328891 A1 | 15.10.2020 | WO2020212452 A1 | 22.10.2020 |

Form PCT/ISA/210 (patent family annex) (January 2015)